# EUROPEAN PATENT APPLICATION

(11) **EP 4 668 599 A1**
(43) Date of publication of application: **24.12.2025**
(21) Application number: 24733486.5
(22) Date of filing: 14.02.2024
(51) Int. Cl.: H04B 7/06, H04B 7/08, H04W 24/08, H04W 72/25, H04W 72/04, H04W 76/14, H04W 4/40, H04W 92/18

(54) **METHOD AND APPARATUS FOR PERFORMING COMMUNICATION IN WIRELESS COMMUNICATION SYSTEM**

(30) Priority: 14.02.2023 KR 20230019450; 16.02.2023 US 202363446345 P; 15.08.2023 US 202363532887 P
(71) Applicant: LG Electronics Inc., Seoul 07336 (KR)
(72) Inventor: PARK, Giwon, Seoul 06772 (KR); LEE, Seungmin, Seoul 06772 (KR); BACK, Seoyoung, Seoul 06772 (KR)
(74) Representative: Maikowski & Ninnemann Patentanwälte Partnerschaft mbB
(86) International application number: PCT/KR2024/002053
(87) International publication number: WO 2024/172469

(57) **Abstract**

Provided are a method for performing wireless communication by a first device and an apparatus supporting same. The method may comprise: establishing a first unicast link with a second device; establishing a second unicast link with a third device; and performing communication with at least one of the second device and the third device, based on a common identity (ID) related to the first unicast link and the second unicast link, wherein the common ID related to the first unicast link and the second unicast link is configured for the first device.

## Description

### TECHNICAL FIELD

This disclosure relates to a wireless communication system.

### BACKGROUND ART

5G NR is a successive technology of LTE-A corresponding to a new Clean-slate type mobile communication system having the characteristics of high performance, low latency, high availability, and so on. 5G NR may use resources of all spectrum available for usage including low frequency bands of less than 1GHz, middle frequency bands ranging from 1GHz to 10GHz, high frequency (millimeter waves) of 24GHz or more, and so on.

A 6G (wireless communication) system has purposes such as (i) very high data rate per device, (ii) a very large number of connected devices, (iii) global connectivity, (iv) very low latency, (v) decrease in energy consumption of battery-free internet of things (IoT) devices, (vi) ultra-reliable connectivity, and (vii) connected intelligence with machine learning capacity. The vision of the 6G system may include four aspects such as intelligent connectivity, deep connectivity, holographic connectivity and ubiquitous connectivity, and the 6G system may satisfy the requirements shown in Table 1 below. For example, Table 1 shows the requirements of the 6G system.

**[Table 1]**

| | |
|---|---|
| Per device peak data rate | 1 Tbps |
| E2E latency | 1 ms |
| Maximum spectral efficiency | 100bps/Hz |
| Mobility support | Up to 1000km/hr |
| Satellite integration | Fully |
| AI | Fully |
| Autonomous vehicle | Fully |
| XR | Fully |
| Haptic Communication | Fully |

### DISCLOSURE

### TECHNICAL PROBLEM

Present disclosure is for providing a device and a method that can effectively provide service in a wireless communication system. More particularly, it is for providing a device and a method for communication.

### TECHNICAL SOLUTION

In an embodiment, provided is a method for performing wireless communication by a first device. The method may comprise: establishing a first unicast link with a second device; establishing a second unicast link with a third device; and performing communication with at least one of the second device and the third device, based on a common identity (ID) related to the first unicast link and the second unicast link, wherein the common ID related to the first unicast link and the second unicast link is configured for the first device.

In an embodiment, provided is a first device adapted to perform wireless communication. The first device may comprise: at least one transceiver; at least one processor; and at least one memory connected to the at least one processor and storing instructions that, based on being executed by the at least one processor, cause the first device to perform operations comprising: establishing a first unicast link with a second device; establishing a second unicast link with a third device; and performing communication with at least one of the second device and the third device, based on a common identity (ID) related to the first unicast link and the second unicast link, wherein the common ID related to the first unicast link and the second unicast link is configured for the first device.

In an embodiment, provided is a processing device adapted to control a first device. The processing device may comprise: at least one processor; and at least one memory connected to the at least one processor and storing instructions that, based on being executed by the at least one processor, cause the first device to perform operations comprising: establishing a first unicast link with a second device; establishing a second unicast link with a third device; and performing communication with at least one of the second device and the third device, based on a common identity (ID) related to the first unicast link and the second unicast link, wherein the common ID related to the first unicast link and the second unicast link is configured for the first device.

In an embodiment, provided is a non-transitory computer-readable storage medium storing instructions. The instructions, when executed, may cause a first device to perform operations comprising: establishing a first unicast link with a second device; establishing a second unicast link with a third device; and performing communication with at least one of the second device and the third device, based on a common identity (ID) related to the first unicast link and the second unicast link, wherein the common ID related to the first unicast link and the second unicast link is configured for the first device.

In an embodiment, provided is a method for performing wireless communication by a second device. The method may comprise: establishing a first unicast link with a first device; and performing communication with at least one of the first device and a third device, based on a common identity (ID) related to the first unicast link and a second unicast link, wherein the common ID related to the first unicast link and the second unicast link is configured for the first device, and wherein the second unicast link is established between the first device and the third device.

In an embodiment, provided is a second device adapted to perform wireless communication. The second device may comprise: at least one transceiver; at least one processor; and at least one memory connected to the at least one processor and storing instructions that, based on being executed by the at least one processor, cause the second device to perform operations comprising: establishing a first unicast link with a first device; and performing communication with at least one of the first device and a third device, based on a common identity (ID) related to the first unicast link and a second unicast link, wherein the common ID related to the first unicast link and the second unicast link is configured for the first device, and wherein the second unicast link is established between the first device and the third device.

In an embodiment, provided is a processing device adapted to control a second device. The processing device may comprise: at least one processor; and at least one memory connected to the at least one processor and storing instructions that, based on being executed by the at least one processor, cause the second device to perform operations comprising: establishing a first unicast link with a first device; and performing communication with at least one of the first device and a third device, based on a common identity (ID) related to the first unicast link and a second unicast link, wherein the common ID related to the first unicast link and the second unicast link is configured for the first device, and wherein the second unicast link is established between the first device and the third device.

In an embodiment, provided is a non-transitory computer-readable storage medium storing instructions. The instructions, when executed, may cause a second device to perform operations comprising: establishing a first unicast link with a first device; and performing communication with at least one of the first device and a third device, based on a common identity (ID) related to the first unicast link and a second unicast link, wherein the common ID related to the first unicast link and the second unicast link is configured for the first device, and wherein the second unicast link is established between the first device and the third device.

### ADVANTAGEOUS EFFECTS OF INVENTION

Present disclosure may provide a device and a method that can effectively provide service in a wireless communication system. For example, communication may be effectively performed through embodiments proposed in the present disclosure.

### BRIEF DESCRIPTION OF THE DRAWINGS

FIG. 1 shows a communication structure providable in a 6G system, based on an embodiment of the present disclosure.
FIG. 2 shows an electromagnetic spectrum, based on an embodiment of the present disclosure.
FIG. 3 shows an example of an NTN typical scenario based on a transparent payload, based on an embodiment of the present disclosure.
FIG. 4 shows an example of an NTN typical scenario based on a regenerative payload, based on an embodiment of the present disclosure.
FIG. 5 shows an example of a sensing operation, based on an embodiment of the present disclosure.
FIG. 6 shows a structure of a slot of a frame, based on an embodiment of the present disclosure.
FIG. 7 shows an example of a BWP, based on an embodiment of the present disclosure.
FIG. 8 shows a procedure of performing V2X or SL communication by a UE based on a resource allocation mode, based on an embodiment of the present disclosure.
FIG. 9 shows an example of wireless communication environment, based on present disclosure.
FIG. 10 shows a procedure of beam failure recovery, based on an embodiment of the present disclosure.
FIG. 11 shows an example related to unicast link establishment, based on an embodiment of the present disclosure.
FIG. 12 shows an example related to communication in a unicast link, based on an embodiment of the present disclosure.
FIG. 13 shows a method for a first device to perform wireless communication, based on an embodiment of the present disclosure.
FIG. 14 shows a method for a second device to perform wireless communication, based on an embodiment of the present disclosure.
FIG. 15 shows a communication system 1, based on an embodiment of the present disclosure.
FIG. 16 shows wireless devices, based on an embodiment of the present disclosure.
FIG. 17 shows a signal process circuit for a transmission signal, based on an embodiment of the present disclosure.
FIG. 18 shows another example of a wireless device, based on an embodiment of the present disclosure.
FIG. 19 shows a hand-held device, based on an embodiment of the present disclosure.
FIG. 20 shows a vehicle or an autonomous vehicle, based on an embodiment of the present disclosure.

### MODE FOR INVENTION

In the present disclosure, "A or B" may mean "only A", "only B" or "both A and B". In other words, in the present disclosure, "A or B" may be interpreted as "A and/or B". For example, in the present disclosure, "A, B or C" may mean "only A", "only B", "only C", or "any combination of A, B and C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, in the present disclosure, "at least one of A, B and C" may mean "only A", "only B", "only C", or "any combination of A, B and C". In addition, "at least one of A, B or C" or "at least one of A, B and/or C" may mean "at least one of A, B and C".

In addition, a parenthesis used in the present disclosure may mean "for example". Specifically, when indicated as "control information (PDCCH)", it may mean that "PDCCH" is proposed as an example of the "control information". In other words, the "control information" of the present disclosure is not limited to "PDCCH", and "PDCCH" may be proposed as an example of the "control information". In addition, when indicated as "control information (i.e., PDCCH)", it may also mean that "PDCCH" is proposed as an example of the "control information".

In the following description, 'when, if, or in case of may be replaced with 'based on'.

A technical feature described individually in one figure in the present disclosure may be individually implemented, or may be simultaneously implemented.

In the present disclosure, a higher layer parameter may be a parameter which is configured, pre-configured or pre-defined for a UE. For example, a base station or a network may transmit the higher layer parameter to the UE. For example, the higher layer parameter may be transmitted through radio resource control (RRC) signaling or medium access control (MAC) signaling.

In the present disclosure, "configure/configured or define/defined" may be interpreted as being configured or pre-configured for a device through pre-defined signaling (e.g., SIB, MAC, RRC) from a base station or a network. In the present disclosure, "configure/configured or define/defined" may be interpreted as being pre-configured for a device.

The technology described below may be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), and so on. The CDMA may be implemented with a radio technology, such as universal terrestrial radio access (UTRA) or CDMA2000. The TDMA may be implemented with a radio technology, such as global system for mobile communications (GSM)/general packet ratio service (GPRS)/enhanced data rate for GSM evolution (EDGE). The OFDMA may be implemented with a radio technology, such as institute of electrical and electronics engineers (IEEE) 802.11 (Wi-Fi), IEEE 802.16 (WiMAX), IEEE 802-20, evolved UTRA (E-UTRA), long term evolution (LTE), 5G NR, and so on.

The technology proposed in the present disclosure may be implemented as 6G wireless technology and may be applied to various 6G systems. For example, the 6G system may have key factors such as enhanced mobile broadband (eMBB), ultra-reliable low latency communications (URLLC), massive machine type communications (mMTC), artificial intelligence (AI) integrated communication, tactile internet, high throughput, high network capacity, high energy efficiency, low backhaul and access network congestion, and enhanced data security.

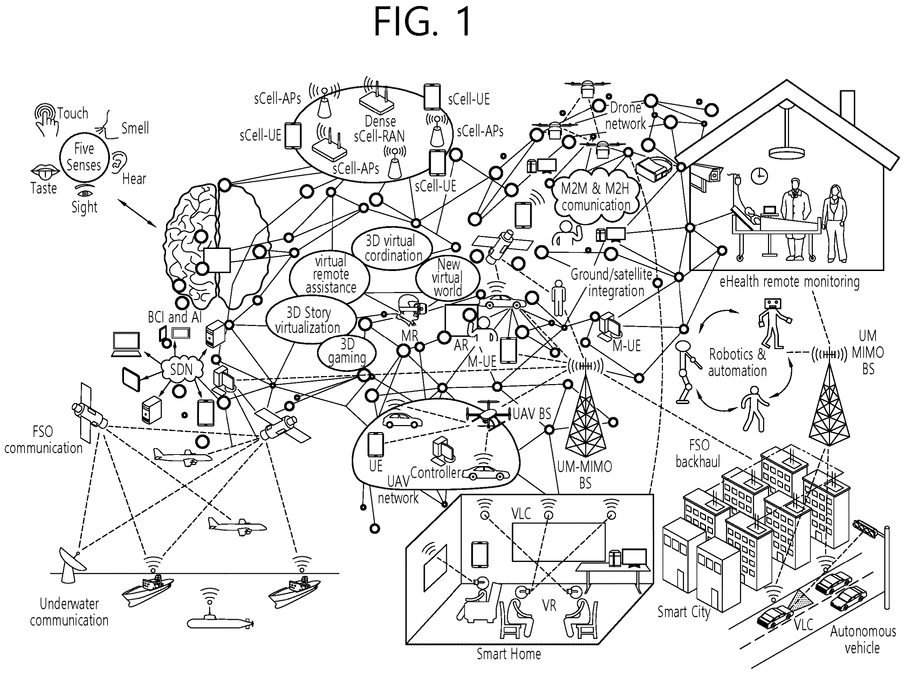

FIG. 1 shows a communication structure providable in a 6G system, based on an embodiment of the present disclosure. The embodiment of FIG. 1 may be combined with various embodiments of the present disclosure.

In 6G, new network characteristics may be as follows.
- Satellites integrated network
- Connected intelligence: Unlike the wireless communication systems of previous generations, 6G is innovative and wireless evolution may be updated from "connected things" to "connected intelligence". AI may be applied in each step (or each signal processing procedure which will be described below) of a communication procedure.
- Seamless integration of wireless information and energy transfer
- Ubiquitous super 3-dimension connectivity: Access to networks and core network functions of drones and very low earth orbit satellites will establish super 3D connection in 6G ubiquitous.

In the new network characteristics of 6G, several general requirements may be as follows.
- Small cell networks
- Ultra-dense heterogeneous network
- High-capacity backhaul
- Radar technology integrated with mobile technology: High-precision localization (or location-based service) through communication is one of the functions of the 6G wireless communication system. Accordingly, the radar system will be integrated with the 6G network.
- Softwarization and virtualization

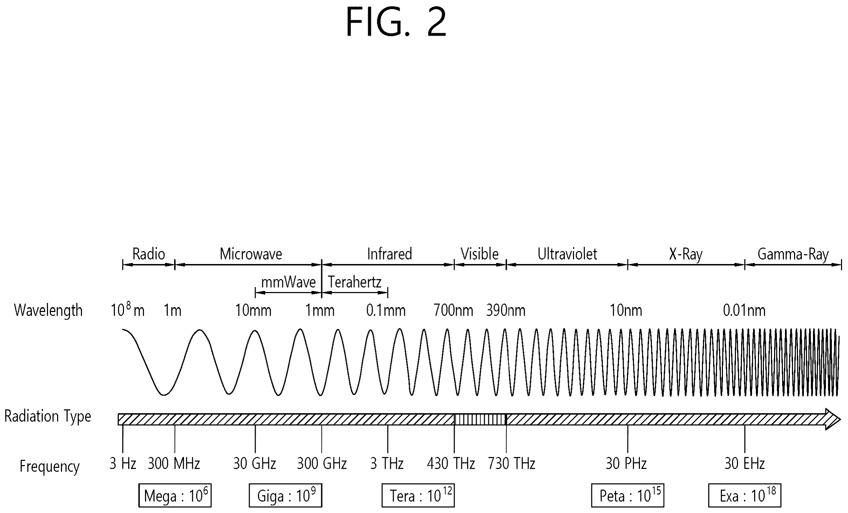

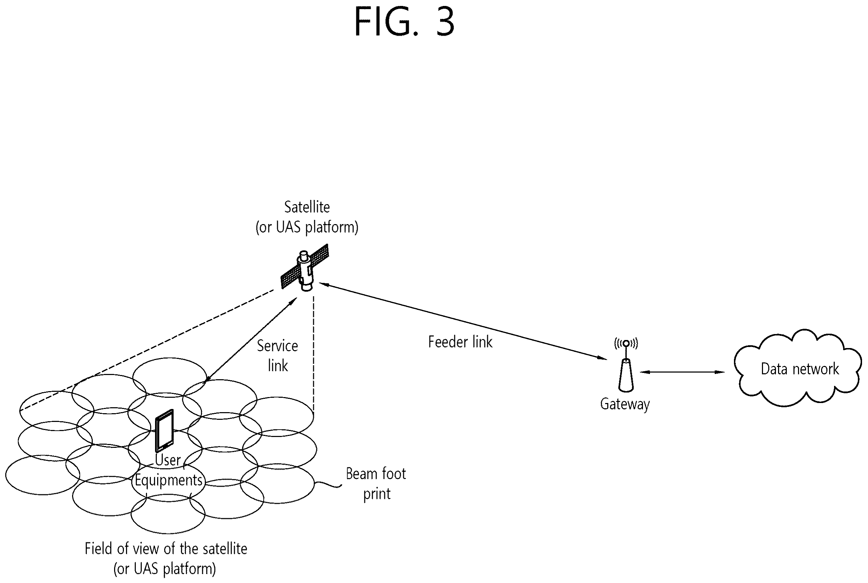

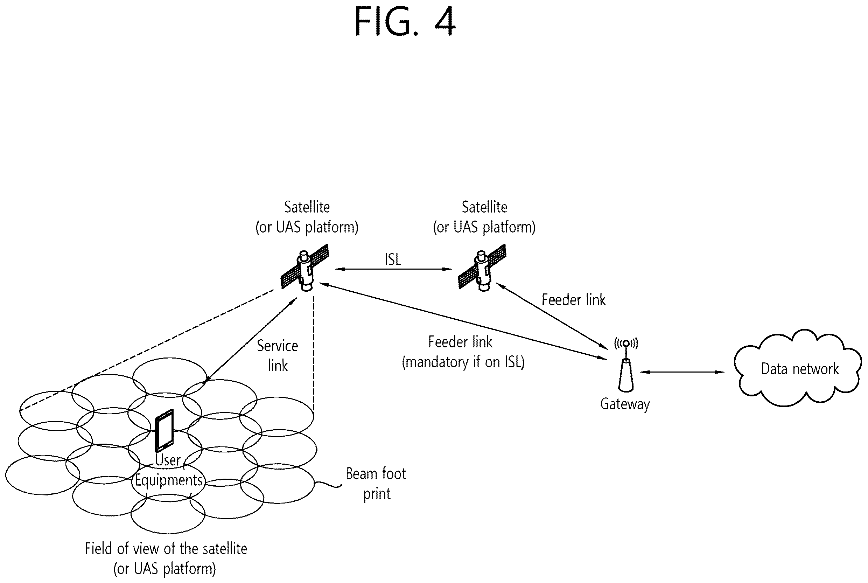

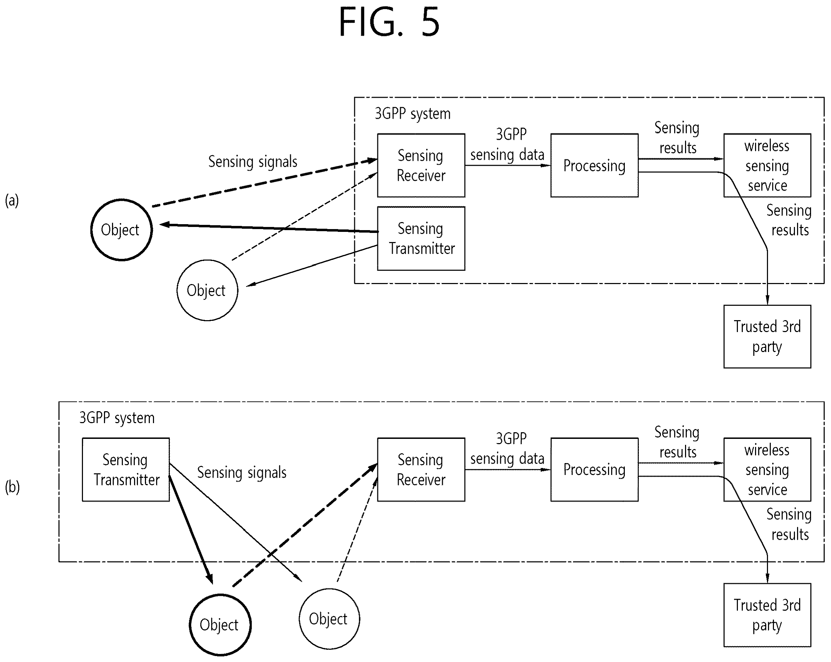

Core implementation technology of 6G system is described below.
- Artificial Intelligence (AI): When AI is introduced to communication, real-time data transmission may be simplified and improved. AI may determine a method of performing complicated target tasks using countless analysis. That is, AI may increase efficiency and reduce processing delay. Operation consuming time such as handover, network selection, and resource scheduling immediately performed by using AI. AI may also play an important role in M2M, machine-to-human, and human-to-machine. In addition, AI may be a prompt communication in brain computer interface (BCI). An AI based communication system may be supported by metamaterial, intelligence structure, intelligence network, intelligence device, intelligence cognitive radio, self-maintaining wireless network, and machine learning.
- Terahertz (THz) communication: A data rate may increase by increasing bandwidth. This may be performed by using sub-TH communication with wide bandwidth and applying advanced massive MIMO technology. THz waves which are known as sub-millimeter radiation, generally indicates a frequency band between 0.1 THz and 10 THz with a corresponding wavelength in a range of 0.03 mm to 3 mm. A band range of 100 GHz to 300 GHz (sub THz band) is regarded as a main part of the THz band for cellular communication. When the sub-THz band is added to the mmWave band, the 6G cellular communication capacity increases. 300 GHz to 3 THz of the defined THz band is in a far infrared (IR) frequency band. A band of 300 GHz to 3 THz is a part of an optical band but is at the border of the optical band and is just behind an RF band. Accordingly, the band of 300 GHz to 3 THz has similarity with RF. FIG. 2 shows an electromagnetic spectrum, based on an embodiment of the present disclosure. The embodiment of FIG. 2 may be combined with various embodiments of the present disclosure. The main characteristics of THz communication include (i) bandwidth widely available to support a very high data rate and (ii) high path loss occurring at a high frequency (a high directional antenna is indispensable). A narrow beam width generated in the high directional antenna reduces interference. The small wavelength of a THz signal allows a larger number of antenna elements to be integrated with a device and BS operating in this band. Therefore, an advanced adaptive arrangement technology capable of overcoming a range limitation may be used.
- Massive MIMO technology (large-scale MIMO)
- Hologram beamforming (HBF)
- Optical wireless technology
- Free space optical (FSO) backhaul network
- Quantum communication
- Cell-free communication
- Integration of wireless information and power transmission
- Integration of wireless communication and sensing
- Integrated access and backhaul network
- Big data analysis
- Reconfigurable intelligent surface
- Metaverse
- Block-chain
- Unmanned aerial vehicle (UAV): An UAV or a drone will be an important factor in 6G wireless communication. In most cases, a high-speed data wireless connection may be provided using UAV technology. A base station (BS) entity may be installed in the UAV to provide cellular connectivity. The UAV may have certain features, which are not found in fixed BS infrastructures, such as easy deployment, strong line-of-sight links, and mobility-controlled degrees of freedom. During emergencies such as natural disasters, the deployment of terrestrial telecommunications infrastructure is not economically feasible and sometimes services cannot be provided in volatile environments. The UAV can easily handle this situation. The UAV will be a new paradigm in the field of wireless communication. This technology facilitates the three basic requirements of wireless networks, such as eMBB, URLLC and mMTC. The UAV can also serve a number of purposes, such as network connectivity improvement, fire detection, disaster emergency services, security and surveillance, pollution monitoring, parking monitoring, and accident monitoring. Therefore, UAV technology is recognized as one of the most important technologies for 6G communication.
- Advanced air mobility (AAM): An AAM is a superordinate concept of urban air mobility (UAM), which is air transportation that can be used in an urban area, and may refer to a means of transportation that includes movement between the urban area and a regional hub.
- Autonomous driving (self-driving): Vehicle to everything (V2X) that is a core element for establishing an autonomous driving infrastructure may be a technology that vehicle communicates and shares with various elements in road for autonomous driving such as vehicle to vehicle (V2V), vehicle to infrastructure (V2I), and so on. To maximize a performance of autonomous driving and to secure high safety, high transmission speed and low latency technology have to be needed. Furthermore, in the future, autonomous driving may need to go beyond delivering warnings or guidance messages to drivers and actively intervene in vehicle operation and directly control the vehicle in dangerous situations. To this end, since the amount of information that needs to be transmitted and received may be enormous, autonomous driving is expected to be maximized in 6G being higher transmission speed and lower latency than 5G.
- Non-terrestrial networks (NTN): An NTN may refer to a network or a network segment that utilizes radio frequency (RF) resources aboard a satellite (or an unmanned aerial system (UAS) platform). FIG. 3 shows an example of an NTN typical scenario based on a transparent payload, based on an embodiment of the present disclosure. FIG. 4 shows an example of an NTN typical scenario based on a regenerative payload, based on an embodiment of the present disclosure. The embodiment of FIG. 3 or FIG. 4 may be combined with various embodiments of the present disclosure. Referring to FIG. 3, a satellite (or an UAS platform) may establish a service link with a UE. The satellite (or the UAS platform) may be connected with a gateway through a feeder link. The satellite may be connected with a data network through the gateway. A beam footprint may refer to an area where signals transmitted by the satellite can be received. Referring to FIG. 4, a satellite (or an UAS platform) may establish a service link with a UE. The satellite (or the UAS platform) connected with the UE may be connected with another satellite (or another UAS platform) through an inter-satellite link (ISL). Another satellite (or another UAS platform) may be connected with a gateway through a feeder link. Based on the regenerative payload, the satellite may be connected with a data network through the gateway and another satellite. If the ISL does not exist between the satellite and another satellite, a feeder link between the satellite and the gateway may be required. FIGs. 3 and 4 are only examples of NTN scenarios, and the NTN can be implemented based on various types of scenarios. For example, the satellite (or the UAS platform) may implement a transparent or regenerative (with on board processing) payload. For example, the satellite (or the UAS platform) may generate multiple beams over a specified service area based on the field of view of the satellite (or the UAS platform). For example, the field of view of the satellite (or the UAS platform) may vary depending on an on-board antenna diagram and a minimum elevation angle. For example, the transparent payload may include radio frequency filtering, frequency conversion, and amplification. Therefore, the waveform signal repeated by the payload may not be changed. For example, the regenerative payload may include radio frequency filtering, frequency conversion and amplification, demodulation/decryption, switching and/or routing, and coding/modulation. For example, the regenerative payload may be substantially equivalent to equipping the satellite (or the UAS platform) with all or part of the base station functionality.
- Integrated sensing and communication (ISAC): Wireless sensing is a technology enabler to acquire information about characteristics of the environment and/or objects within the environment, that uses radio frequency to determine the distance (range), angle, or instantaneous linear velocity of objects, etc. Radio frequency sensing functionality can provide services for device-free object localization as there is lack of need for the object to be connected via a device in the network. The capabilities to obtain range, velocity, and angle information from the radio frequency signals can provide a broad range of new functionality, such as various objects detection, object recognition (e.g., vehicle, human, animal, UAV) and high accuracy localization, tracking and activity recognition. For example, the wireless sensing service may provide input to different verticals (e.g., unmanned aerial vehicle, smart home, V2X, factories, railways, public safety, etc.) enabling applications offering e.g., intruder detection, assisted automotive maneuvering and navigation, trajectory tracing, collision avoidance, traffic management, health and activity monitoring. In some cases, wireless sensing can also use non-3GPP type sensors (e.g., radar, camera) to further support the 3GPP-based sensing. For example, the operation of the wireless sensing service, i.e., sensing operation, may rely on processing the transmissions, reflections, and scattering of wireless sensing signals. Wireless sensing, therefore, may have the opportunity to enhance the legacy system from a communication network to a wireless communication and sensing network. FIG. 5 shows an example of a sensing operation, based on an embodiment of the present disclosure. The embodiment of FIG. 5 may be combined with various embodiments of the present disclosure. Specifically, (a) of FIG. 5 shows an example of sensing (e.g., monostatic sensing) with co-located sensing receiver and sensing transmitter, and (b) of FIG. 5 shows an example of sensing (e.g., bistatic sensing) with separated sensing receiver and sensing transmitter.

Layers of a radio interface protocol between the UE and the network may be classified into a first layer (layer 1, L1), a second layer (layer 2, L2), and a third layer (layer 3, L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

The physical layer provides an upper layer with an information transfer service through a physical channel. The physical layer is connected to a medium access control (MAC) layer which is an upper layer of the physical layer through a transport channel. Data is transferred between the MAC layer and the physical layer through the transport channel. The transport channel is classified according to how and with what characteristics data is transmitted through a radio interface.

Between different physical layers, i.e., a physical layer of a transmitter and a physical layer of a receiver, data are transferred through the physical channel. The physical channel is modulated using an orthogonal frequency division multiplexing (OFDM) scheme, and utilizes time and frequency as a radio resource.

The MAC layer provides services to a radio link control (RLC) layer, which is a higher layer of the MAC layer, via a logical channel. The MAC layer provides a function of mapping multiple logical channels to multiple transport channels. The MAC layer also provides a function of logical channel multiplexing by mapping multiple logical channels to a single transport channel. The MAC layer provides data transfer services over logical channels.

The RLC layer performs concatenation, segmentation, and reassembly of Radio Link Control Service Data Unit (RLC SDU). In order to ensure diverse quality of service (QoS) required by a radio bearer (RB), the RLC layer provides three types of operation modes, i.e., a transparent mode (TM), an unacknowledged mode (UM), and an acknowledged mode (AM). An AM RLC provides error correction through an automatic repeat request (ARQ).

A radio resource control (RRC) layer is defined only in the control plane. The RRC layer serves to control the logical channel, the transport channel, and the physical channel in association with configuration, reconfiguration and release of RBs. The RB is a logical path provided by the first layer (i.e., the physical layer or the PHY layer) and the second layer (i.e., a MAC layer, an RLC layer, a packet data convergence protocol (PDCP) layer, and a service data adaptation protocol (SDAP) layer) for data delivery between the UE and the network.

Functions of a packet data convergence protocol (PDCP) layer in the user plane include user data delivery, header compression, and ciphering. Functions of a PDCP layer in the control plane include control-plane data delivery and ciphering/integrity protection.

A service data adaptation protocol (SDAP) layer is defined only in a user plane. The SDAP layer performs mapping between a Quality of Service (QoS) flow and a data radio bearer (DRB) and QoS flow ID (QFI) marking in both DL and UL packets.

The configuration of the RB implies a process for specifying a radio protocol layer and channel properties to provide a particular service and for determining respective detailed parameters and operations. The RB can be classified into two types, i.e., a signaling RB (SRB) and a data RB (DRB). The SRB is used as a path for transmitting an RRC message in the control plane. The DRB is used as a path for transmitting user data in the user plane.

When an RRC connection is established between an RRC layer of the UE and an RRC layer of the E-UTRAN, the UE is in an RRC_CONNECTED state, and, otherwise, the UE may be in an RRC_IDLE state. In case of the NR, an RRC_INACTIVE state is additionally defined, and a UE being in the RRC_INACTIVE state may maintain its connection with a core network whereas its connection with the BS is released.

Data is transmitted from the network to the UE through a downlink transport channel. Examples of the downlink transport channel include a broadcast channel (BCH) for transmitting system information and a downlink-shared channel (SCH) for transmitting user traffic or control messages. Traffic of downlink multicast or broadcast services or the control messages can be transmitted on the downlink-SCH or an additional downlink multicast channel (MCH). Data is transmitted from the UE to the network through an uplink transport channel. Examples of the uplink transport channel include a random access channel (RACH) for transmitting an initial control message and an uplink SCH for transmitting user traffic or control messages.

Examples of logical channels belonging to a higher channel of the transport channel and mapped onto the transport channels include a broadcast channel (BCCH), a paging control channel (PCCH), a common control channel (CCCH), a multicast control channel (MCCH), a multicast traffic channel (MTCH), etc.

A radio frame may be used for performing uplink and downlink transmission. A radio frame has a length of 10ms and may be defined to be configured of two half-frames (HFs). A half-frame may include five 1ms subframes (SFs). A subframe (SF) may be divided into one or more slots, and the number of slots within a subframe may be determined based on subcarrier spacing (SCS). Each slot may include 12 or 14 OFDM(A) symbols according to a cyclic prefix (CP).

In case of using a normal CP, each slot may include 14 symbols. In case of using an extended CP, each slot may include 12 symbols. Herein, a symbol may include an OFDM symbol (or CP-OFDM symbol) and a Single Carrier-FDMA (SC-FDMA) symbol (or Discrete Fourier Transform-spread-OFDM (DFT-s-OFDM) symbol).

Table 2 shown below represents an example of a number of symbols per slot (N^{slot}_{symb}), a number slots per frame (N^{frame,u}ₛₗₒₜ), and a number of slots per subframe (N^{subframe,u}ₛₗₒₜ) based on an SCS configuration (u), in a case where a normal CP or an extended CP is used.

**[Table 2]**

| CP type | SCS (15*2^{u}) | N^{slot}_{symb} | N^{frame,u}ₛₗₒₜ | N^{subframe,u}ₛₗₒₜ |
|---|---|---|---|---|
| normal CP | 15kHz (u=0) | 14 | 10 | 1 |
| | 30kHz (u=1) | 14 | 20 | 2 |
| | 60kHz (u=2) | 14 | 40 | 4 |
| | 120kHz (u=3) | 14 | 80 | 8 |
| | 240kHz (u=4) | 14 | 160 | 16 |
| extended CP | 60kHz (u=2) | 12 | 40 | 4 |

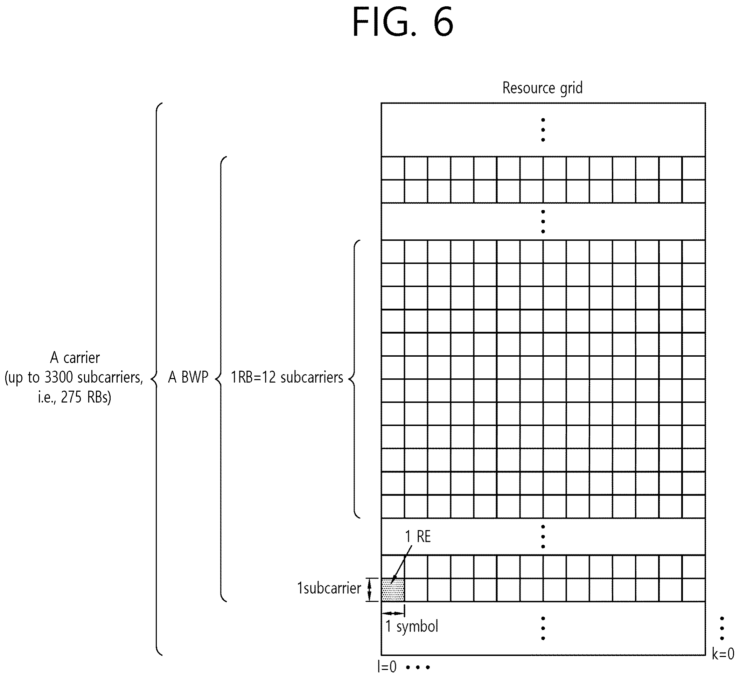

FIG. 6 shows a structure of a slot of a frame, based on an embodiment of the present disclosure. The embodiment of FIG. 6 may be combined with various embodiments of the present disclosure.

Referring to FIG. 6, a slot includes a plurality of symbols in a time domain. A carrier includes a plurality of subcarriers in a frequency domain. A Resource Block (RB) may be defined as a plurality of consecutive subcarriers (e.g., 12 subcarriers) in the frequency domain. A Bandwidth Part (BWP) may be defined as a plurality of consecutive (Physical) Resource Blocks ((P)RBs) in the frequency domain, and the BWP may correspond to one numerology (e.g., SCS, CP length, and so on). A carrier may include a maximum of N number BWPs (e.g., 5 BWPs). Data communication may be performed via an activated BWP. Each element may be referred to as a Resource Element (RE) within a resource grid and one complex symbol may be mapped to each element.

A bandwidth part (BWP) may be a set of consecutive physical resource blocks (PRBs) in a given numerology. The PRB may be selected from consecutive sub-sets of common resource blocks (CRBs) for the given numerology on a given carrier

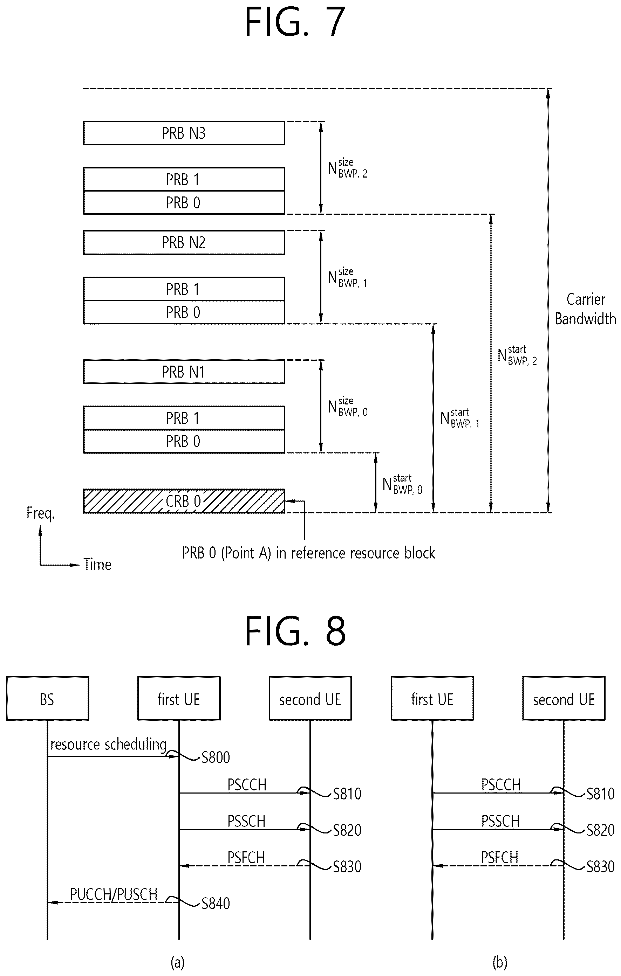

FIG. 7 shows an example of a BWP, based on an embodiment of the present disclosure. The embodiment of FIG. 7 may be combined with various embodiments of the present disclosure. It is assumed in the embodiment of FIG. 7 that the number of BWPs is 3.

Referring to FIG. 7, a common resource block (CRB) may be a carrier resource block numbered from one end of a carrier band to the other end thereof. In addition, the PRB may be a resource block numbered within each BWP. A point A may indicate a common reference point for a resource block grid.

The BWP may be configured by a point A, an offset NstartBWP from the point A, and a bandwidth NsizeBWP. For example, the point A may be an external reference point of a PRB of a carrier in which a subcarrier 0 of all numerologies (e.g., all numerologies supported by a network on that carrier) is aligned. For example, the offset may be a PRB interval between a lowest subcarrier and the point A in a given numerology. For example, the bandwidth may be the number of PRBs in the given numerology.

A sidelink synchronization signal (SLSS) may include a primary sidelink synchronization signal (PSSS) and a secondary sidelink synchronization signal (SSSS), as a sidelink (SL)-specific sequence. The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, a UE may use the S-PSS for initial signal detection and for synchronization acquisition. For example, the UE may use the S-PSS and the S-SSS for acquisition of detailed synchronization and for detection of a synchronization signal ID.

A physical sidelink broadcast channel (PSBCH) may be a (broadcast) channel for transmitting default (system) information which must be first known by the UE before SL signal transmission/reception. For example, the default information may be information related to SLSS, a duplex mode (DM), a time division duplex (TDD) uplink/downlink (UL/DL) configuration, information related to a resource pool, a type of an application related to the SLSS, a subframe offset, broadcast information, or the like. For example, for evaluation of PSBCH performance, in NR V2X, a payload size of the PSBCH may be 56 bits including 24-bit cyclic redundancy check (CRC).

The S-PSS, the S-SSS, and the PSBCH may be included in a block format (e.g., SL synchronization signal (SS)/PSBCH block, hereinafter, sidelink-synchronization signal block (S-SSB)) supporting periodical transmission. The S-SSB may have the same numerology (i.e., SCS and CP length) as a physical sidelink control channel (PSCCH)/physical sidelink shared channel (PSSCH) in a carrier, and a transmission bandwidth may exist within a (pre-)configured sidelink (SL) BWP. For example, the S-SSB may have a bandwidth of 11 resource blocks (RBs). For example, the PSBCH may exist across 11 RBs. In addition, a frequency position of the S-SSB may be (pre-)configured. Accordingly, the UE does not have to perform hypothesis detection at frequency to discover the S-SSB in the carrier.

In the present disclosure, a PSCCH may be replaced with a control channel, a physical control channel, a control channel related to sidelink, a physical control channel related to sidelink, etc. In the present disclosure, a PSSCH may be replaced with a shared channel, a physical shared channel, a shared channel related to sidelink, a physical shared channel related to sidelink, etc.

FIG. 8 shows a procedure of performing V2X or SL communication by a UE based on a resource allocation mode, based on an embodiment of the present disclosure. The embodiment of FIG. 8 may be combined with various embodiments of the present disclosure.

Referring to (a) of FIG. 8, in a resource allocation mode 1, a base station may schedule SL resource(s) to be used by a UE for SL transmission. For example, in step S800, a base station may transmit information related to SL resource(s) and/or information related to UL resource(s) to a first UE. For example, the UL resource(s) may include PUCCH resource(s) and/or PUSCH resource(s). For example, the UL resource(s) may be resource(s) for reporting SL HARQ feedback to the base station.

For example, the first UE may receive information related to dynamic grant (DG) resource(s) and/or information related to configured grant (CG) resource(s) from the base station. For example, the CG resource(s) may include CG type 1 resource(s) or CG type 2 resource(s). In the present disclosure, the DG resource(s) may be resource(s) configured/allocated by the base station to the first UE through a downlink control information (DCI). In the present disclosure, the CG resource(s) may be (periodic) resource(s) configured/allocated by the base station to the first UE through a DCI and/or an RRC message. For example, in the case of the CG type 1 resource(s), the base station may transmit an RRC message including information related to CG resource(s) to the first UE. For example, in the case of the CG type 2 resource(s), the base station may transmit an RRC message including information related to CG resource(s) to the first UE, and the base station may transmit a DCI related to activation or release of the CG resource(s) to the first UE.

In step S810, the first UE may transmit a PSCCH (e.g., sidelink control information (SCI) or 1st-stage SCI) to a second UE based on the resource scheduling. In step S820, the first UE may transmit a PSSCH (e.g., 2nd-stage SCI, MAC PDU, data, etc.) related to the PSCCH to the second UE. In step S830, the first UE may receive a PSFCH related to the PSCCH/PSSCH from the second UE. For example, HARQ feedback information (e.g., NACK information or ACK information) may be received from the second UE through the PSFCH. In step S840, the first UE may transmit/report HARQ feedback information to the base station through the PUCCH or the PUSCH. For example, the HARQ feedback information reported to the base station may be information generated by the first UE based on the HARQ feedback information received from the second UE. For example, the HARQ feedback information reported to the base station may be information generated by the first UE based on a pre-configured rule. For example, the DCI may be a DCI for SL scheduling.

Referring to (b) of FIG. 8, in a resource allocation mode 2, a UE may determine SL transmission resource(s) within SL resource(s) configured by a base station/network or pre-configured SL resource(s). For example, the configured SL resource(s) or the pre-configured SL resource(s) may be a resource pool. For example, the UE may autonomously select or schedule resource(s) for SL transmission. For example, the UE may perform SL communication by autonomously selecting resource(s) within the configured resource pool. For example, the UE may autonomously select resource(s) within a selection window by performing a sensing procedure and a resource (re)selection procedure. For example, the sensing may be performed in a unit of subchannel(s). For example, in step S810, a first UE which has selected resource(s) from a resource pool by itself may transmit a PSCCH (e.g., sidelink control information (SCI) or 1st-stage SCI) to a second UE by using the resource(s). In step S820, the first UE may transmit a PSSCH (e.g., 2nd-stage SCI, MAC PDU, data, etc.) related to the PSCCH to the second UE. In step S830, the first UE may receive a PSFCH related to the PSCCH/PSSCH from the second UE.

Referring to (a) or (b) of FIG. 8, for example, the first UE may transmit a SCI to the second UE through the PSCCH. Alternatively, for example, the first UE may transmit two consecutive SCIs (e.g., 2-stage SCI) to the second UE through the PSCCH and/or the PSSCH. In this case, the second UE may decode two consecutive SCIs (e.g., 2-stage SCI) to receive the PSSCH from the first UE. In the present disclosure, a SCI transmitted through a PSCCH may be referred to as a 1st SCI, a first SCI, a 1st-stage SCI or a 1st-stage SCI format, and a SCI transmitted through a PSSCH may be referred to as a 2nd SCI, a second SCI, a 2nd-stage SCI or a 2nd-stage SCI format.

Referring to (a) or (b) of FIG. 8, in step S830, the first UE may receive the PSFCH. For example, the first UE and the second UE may determine a PSFCH resource, and the second UE may transmit HARQ feedback to the first UE using the PSFCH resource.

Referring to (a) of FIG. 8, in step S840, the first UE may transmit SL HARQ feedback to the base station through the PUCCH and/or the PUSCH.

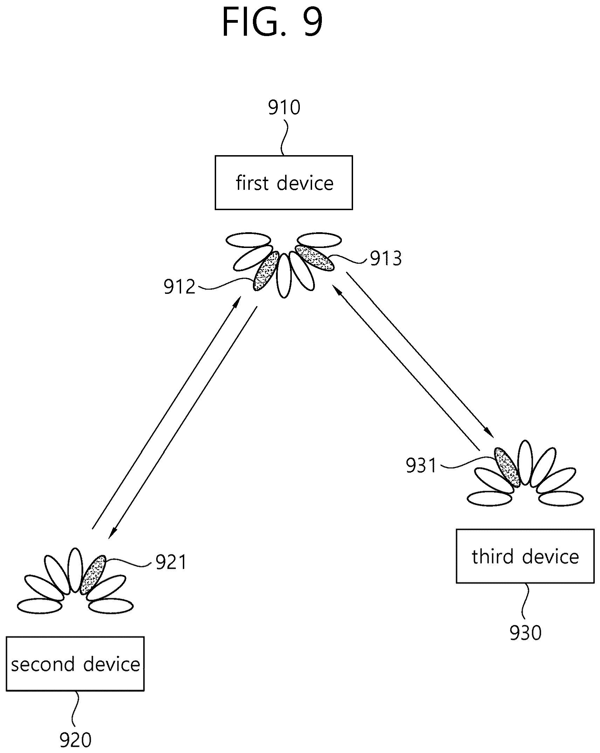

FIG. 9 shows an example of wireless communication environment, based on present disclosure. The embodiment of FIG. 9 may be combined with various embodiments of the present disclosure.

Referring to FIG. 9, a first device 910, a second device 920, and a third device 930 may be illustrated, as part of devices using a wireless channel in a wireless communication system. FIG. 9 illustrates one first device 910, one second device 920, and one third device 930 only, but may not be limited to it.

According to the present disclosure, a first device 910, a second device 920, and/or a third device 930 may transmit and/or receive a wireless signal in mmWave bands. For example, to enhance channel gain, a first device 910, a second device 920, and/or a third device 930 may perform beamforming. For example, beam forming may include TX beamforming and/or RX beamforming. For example, a first device 910, a second device 920, and/or a third device 930 may provide directivity to a TX signal or an RX signal. For example, a first device 910, a second device 920, and/or a third device 930 may select serving beams 912, 913, 921, 931 through a beam search procedure or a beam management procedure. After selecting serving beams 912, 913, 921, 931, communication may be performed through a resource transmitting serving beams 912, 913, 921, 931 and a resource in a quasi co-located (QCL) relationship.

According to the present disclosure, a first device 910, a second device 920, and/or a third device 930 may include an antenna array. Each antenna included in an antenna array may be referred to as an array element, or as an antenna element. An antenna array may consist of various forms such as a linear array or a multi-layer array. An antenna array may be referred to as a massive antenna array. For example, an antenna array may include multiple sub-arrays, each including multiple antenna elements.

In conventional NR Uu (an operation between a base station and a UE), a Beam Management operation (Beam scheduling, Beam Selection, Beam Failure Recovery, etc) in mmWave Frequencies has been newly introduced. For example, a beam management operation may be beam scheduling, beam selection, and/or beam failure recovery, etc. According to a present disclosure, a beam management operation (for example, a beam failure recovery operation) may be proposed as follows. For example, a following proposal may be an operation for beam management in NR. For example, a following proposal may not be limited to NR. For example, a following proposal may be an operation for beam management in sidelink. For example, a following proposal may not be limited to sidelink. For example, a following proposal may be an operation for beam management in NR sidelink.

A UE may perform a FR2 operation based on a following operation (communication based on mmWave Frequencies). For example, FR2 may be sidelink FR2. For example, sidelink FR2 may be sidelink communication based on sidelink mmWave Frequencies. For example, following operations may not be limited to sidelink FR2. The present disclosure may not be limited to sidelink FR2. For example, the present disclosure may be applied to 5G FR2 or beyond 5G FR2 (for example, 6G FR2)
- An operation of beam sweeping: a UE may perform an operation finding a best beam (for example, a TX beam, a RX beam) with sweeping a beam to use for communication. For example, a UE may perform an operation covering a spatial domain by using a TX beam and/or an RX beam during a specific time interval as a predetermined scheme. For example, communication in a beam sweeping operation may be sidelink communication.
- An operation of beam measurement: a UE may perform an operation discovering a RS that a measurement value of a RS is greater than a threshold with measuring a reference signal (RS) that a peer UE transmits.
- An operation of beam selection: a UE may perform an operation selecting a best beam (for example, a TX beam, an RX beam) based on beam measurement.
- An operation of beam reporting: a UE may perform an operation reporting a selected best beam to a peer UE or a base station.
- An operation of beam pairing: a UE may perform an operation for pairing a beam (for example, a TX beam/an RX beam) between each other to enable communication through a beam (for example, a TX beam/an RX beam) between UEs.

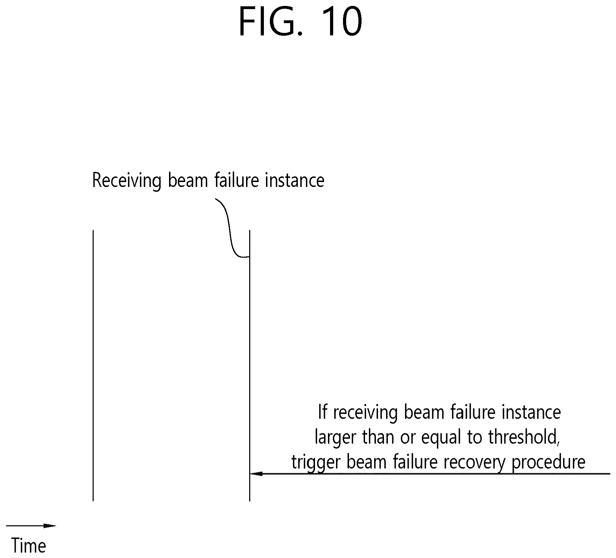

FIG. 10 shows a procedure of beam failure recovery, based on an embodiment of the present disclosure. The embodiment of FIG. 10 may be combined with various embodiments of the present disclosure.

Referring to FIG. 10, if a UE detects a failure of a beam that is using for communication by a threshold, the UE may perform a procedure recovering a beam by triggering a beam failure recovery procedure. For example, if a UE detects a failure of a beam that is using for sidelink communication by a threshold, the UE may perform a procedure recovering a beam by triggering a sidelink beam failure recovery procedure. For example, if a MAC entity receives a beam failure instance larger than or equal to a threshold from a physical layer, the UE may perform a procedure recovering a beam by triggering a beam failure recovery procedure. For example, a procedure recovering a beam by triggering a beam failure recovery procedure may be performed by a MAC entity of a UE. For example, if a MAC entity receives a beam failure instance larger than or equal to a threshold from a physical layer, the UE may perform a procedure recovering a beam by triggering a sidelink beam failure recovery procedure. For example, a procedure recovering a beam by triggering a sidelink beam failure recovery procedure may be performed by a MAC entity of a UE. The present disclosure described for a sidelink beam failure, but may not be limited to it. For example, the present disclosure may be applied to a beam failure other than a sidelink beam failure as well as a sidelink beam failure.

According to FIG. 10, for example, a beam failure recovery procedure used for indicating when a beam failure is detected may be configured for a MAC entity by a RRC. For example, a beam failure is detected by counting a beam failure instance indication from lower layers to a MAC entity. For example, RRC may configure the beam failure instance max count and a beam failure detection timer. For example, the beam failure instance max count may determine after how many beam failure events a UE triggers beam failure recovery. For example, the beam failure detection timer may be a timer for beam failure detection. For example, if the beam failure instance indication has been received from lower layers, the beam failure detection timer may be started or restarted. For example, if the beam failure instance indication has been received from lower layers, a beam failure instance counter may be incremented by 1. For example, if the beam failure instance counter is larger than or equal to the beam failure instance max count, a beam failure may be detected. For example, if the beam failure instance counter is larger than or equal to the beam failure instance max count, a beam failure recovery procedure may be triggered. For example, if the beam failure detection timer expires, the beam failure instance counter may be set to 0,

According to a disclosure, a subsequent operation of a UE may be proposed if a (SL) BFR procedure fails as follows.

If beam failure recovery is triggered, a UE may transmit a (SL) BFR MAC CE (e.g., a purpose indicating that there is a problem in a TX beam or an RX beam currently operating or a purpose indicating that there is a problem in a reference signal associated with a TX beam or an RX beam currently operating or a purpose indicating the best TX beam or the best RX beam for beam failure recovery due to BFR being triggered) and/or may start a (SL) BFR procedure by running a (SL) BFR timer. If not receiving feedback for a transmitted (SL) BFR MAC CE (for example, (SL) BFR Confirmation MAC CE or HARQ ACK feedback) until BFR timer expires, a UE may start a procedure as follows.
- A UE may re-trigger a BFR procedure by transmitting a (SL) BFR MAC CE (for example, a purpose indicating that there is a problem in a TX beam or an RX beam currently operating or a purpose indicating that there is a problem in a reference signal associated with a TX beam or an RX beam currently operating or a purpose indicating the best TX beam or the best RX beam for beam failure recovery due to BFR being triggered).
- A UE may consider an (SL) BFR procedure as a failure and may declare (SL) RLF for a PC5 RRC connection where (SL) BFR is triggered and may report it to a base station or a peer UE (with cause: (SL) beam failure recovery fail-based (sidelink) RLF).
- A UE may re-trigger or re-perform at least one of a beam sweeping operation, a beam selection operation, or a beam paring operation.

(In (sidelink) FR2,) for beam management of a UE (for example, beam sweeping, beam measurement, beam selection, beam pairing), a UE may select and/or decide and/or adjust and/or manage a beam that is available between each other by transmitting and receiving a RS.

For example, if a (sidelink) UE broadcasts and/or unicasts a PC5-S direct communication request (DCR) message to establish an initial unicast connection, and if a (sidelink) UE that received a corresponding unicast and/or broadcast message determines to establish a unicast connection with a UE that transmitted the DCR message by confirming the content of the DCR message, the sidelink UE that received a corresponding broadcast message may complete a unicast connection establishment by transmitting a PC5-S direct communication accept (DCA) message. After successfully transmitting and/or receiving a DCR message and/or a DCA message between UEs, a (sidelink) unicast connection (or link) may be established between UEs.

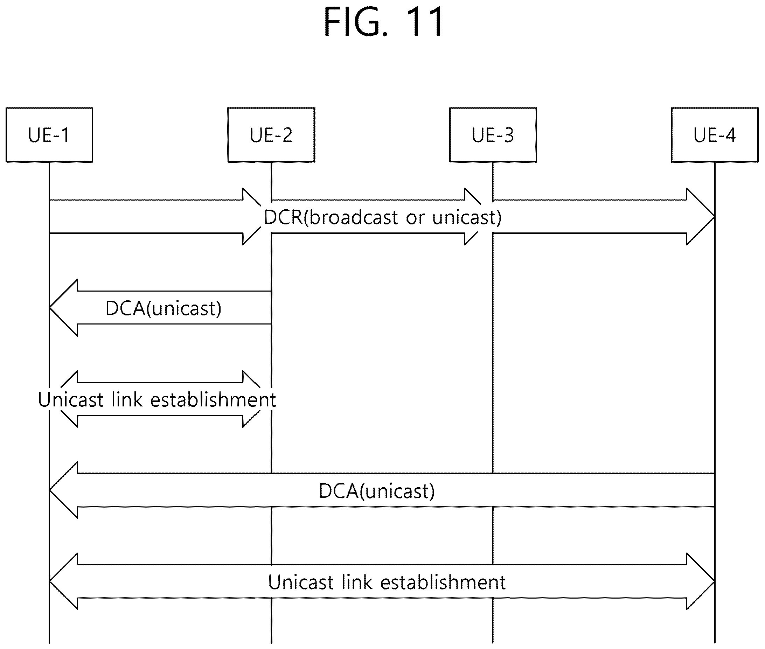

FIG. 11 shows an example related to unicast link establishment, based on an embodiment of the present disclosure. The embodiment of FIG.11 may be combined with various embodiments of the present disclosure.

Referring to FIG. 11, UE-1 may transmit a direct communication request (DCR) message to establish a unicast link. For example, UE-1 may transmit a DCR message to initiate a unicast layer-2 link establishment procedure. For example, Direct Communication Request message may be transmitted via (PC5) broadcast or unicast. For example, Direct Communication Request message may be transmitted via (PC5) broadcast or unicast using the source Layer-2 ID and the destination Layer-2 ID. For example, source layer-2 ID may identify sender of the data in (NR) (sidelink) communication. For example, destination layer-2 ID: may identify target of the data in (NR) (sidelink) communication. For example, the protocol used for the control plane signalling over the PC5 reference point for the secure layer-2 link is may be PC5-S(signalling) protocol. For example, a direct communication request (DCR) message may be related to layer-2 link establishment.

For example, if target user information is included in a direct communication request (DCR) message, the target UE may respond by establishing with UE-1. For example, a unicast link may be established between the target UE and the UE-1, based on a direct communication request (DCR) message. For example, the target UE may be UE-2. For example, the target UE may be UE-4. For example, a direct communication accept (DCA) message may be transmitted by the target UE(s). For example, UE-2 may respond with a direct communication accept message. For example, UE-4 may respond with a direct communication accept message. For example, a unicast link may be established between the target UE and the UE-1, based on a direct communication accept (DCA) message. For example, a direct communication accept (DCA) message may be related to layer-2 link establishment.

For example, if target user information is not included in the direct communication request (DCR) message, the UE that is interested (in using the service) may respond to the request by establishing with UE-1. For example, a unicast link may be established between the UE that is interested (in using the service) and the UE-1, based on a direct communication request (DCR) message. For example, the UE that is interested (in using the service) may be UE-2. For example, the UE that is interested (in using the service) may be UE-4. For example, a direct communication accept (DCA) message may be transmitted by the UE that is interested (in using the service). For example, UE-2 responds with a DCA message. For example, UE-4 responds with a DCA message. For example, a unicast link may be established between the UE that is interested (in using the service) and the UE-1, based on a direct communication accept (DCA) message. For example, a direct communication accept (DCA) message may be related to layer-2 link establishment.

By establishing dedicated unicast links and leveraging a common ID for communication, this method can significantly increase network efficiency. It ensures direct and specific pathways for data transmission, reducing the likelihood of data collisions and bandwidth waste that are common in broadcast or multicast systems. This direct approach can lead to more efficient use of network resources and potentially higher data transmission speeds.

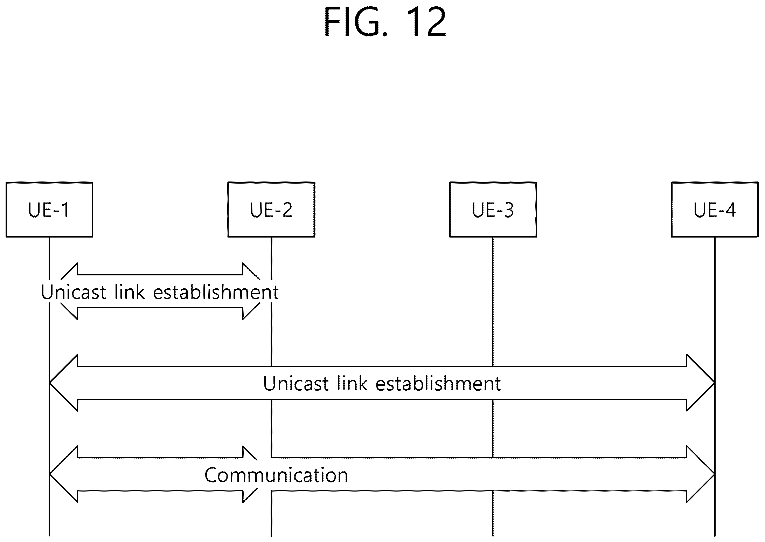

FIG. 12 shows an example related to communication in a unicast link, based on an embodiment of the present disclosure. The embodiment of FIG.12 may be combined with various embodiments of the present disclosure.

Referring to FIG. 12, UE-1 and UE-2 may establish a unicast link. For example, UE-1 and UE-2 may establish a first unicast link. UE-1 and UE-4 may establish a unicast link. For example, UE-1 and UE-4 may establish a second unicast link. UE-1 may perform communication at least one of UE-2 or UE-4. For example, UE-1 may perform communication at least one of UE-2 or UE-4, based on a common ID. For example, UE-1 may perform communication at least one of UE-2 or UE-4, based on a common ID related to a first unicast link and a second unicast link. For example, a common ID related to a first unicast link and a second unicast link may be pre-configured. For example, a common ID related to a first unicast link and a second unicast link may be configured by a base station. For example, a common ID related to a first unicast link and a second unicast link may be layer-2 ID. For example, a common ID related to a first unicast link and a second unicast link may be layer-2 ID for groupcast. For example, a common ID related to a first unicast link and a second unicast link may be layer-2 ID for broadcast. For example, a common ID related to a first unicast link and a second unicast link may be transmitted via at least one of SCI, MAC CE, PC5-RRC message, or PC5-S message.

A UE may establish a plurality of (sidelink) unicast connections with a same UE (for example, 1:N (sidelink) unicast connection establishments), or a UE may establish a plurality of 1:1 unicast connections with a plurality of UEs.

In a conventional (sidelink) unicast operation, a UE may not share any signalling (for example, PC5 RRC message or a MAC CE or (sidelink) control information (SCI) or PC5-S message) between different unicast links.

According to the present disclosure, by sharing resource configuration information for beam-related RS, or beam measurement-related information / beam management-related information between a plurality of (sidelink) unicast links, a method that can reduce message overhead caused by individual beam measurement/beam management-related signalling transmission between a plurality of unicast links may be proposed as follows. According to the present disclosure, by sharing resource configuration information for beam-related RS, or beam measurement-related information (for example, a value of L1 RSRP/SINR/RSRQ measurement of an RS or a RS resource) / beam management-related information (for example, selected best beam-related RS index information or RS resource index information, a value of L1 RSRP/SINR/RSRQ measurement of a selected beam RS resource, a recommended TX beam/RX beam RS, or RS resource information, etc) between a plurality of (sidelink) unicast links, a method that can reduce message overhead caused by individual beam measurement/beam management-related signalling transmission between a plurality of unicast links may be proposed as follows. For example, if a TX UE configured a plurality of (sidelink) unicast connections (links), a method that beam RS or RS resource information (for example, resource information used for RS transmission/reception) for a beam RS that a TX UE transmits, beam measurement-related information (for example, a value of L1 RSRP/SINR/RSRQ measurement of a RS or a RS resource) / beam management-related information (for example, selected best beam-related RS index information or RS resource index information, a value of L1 RSRP/SINR/RSRQ measurement of a selected beam RS resource, a recommended TX beam/RX beam RS, or RS resource information, etc) can be used together for a plurality of (sidelink) unicast configuration-related RX UEs may be proposed in the present disclosure. For example, (SL) RS or ID used for (SL) RS resource information transmission (for example, dedicated broadcast/groupcast destination layer 2 ID or dedicated broadcast/groupcast destination layer 1 ID) or resource position information used for (SL) RS transmission (seed value or ID value used for RS sequence generation) that is commonly used between a plurality of (sidelink) unicast links may be pre-configured and may be shared via (sidelink) control information (SCI) or MAC CE or PC5 RRC message or PC5-S message exchange between (sidelink) unicast link establishment UEs. For example, information transmission related to (SL) RS or (SL) RS resource information or beam measurement-related information (for example, a value of L1 RSRP/SINR/RSRQ measurement of an RS or an RS resource) / beam management-related information (for example, selected best beam-related RS index information or RS resource index information, a value of L1 RSRP/SINR/RSRQ measurement of a selected beam RS resource, a recommended TX beam/RX beam RS, or RS resource information, etc) commonly used between a plurality of (sidelink) unicast links may be designated for groupcast or broadcast and a UE may perform transmission for this information in a groupcast or broadcast manner. For example, cast type, which is used for transmission, including the (SL) RS or the ID used for (SL) RS resource information transmission (for example, dedicated broadcast/groupcast destination layer 2 ID or dedicated broadcast/groupcast destination layer 1 ID) or the resource position information used for (SL) RS transmission (seed value or ID value used for RS sequence generation) that is commonly used between a plurality of (sidelink) unicast links may be designated for groupcast or broadcast and a UE may perform transmission for this information in a groupcast or broadcast manner.

For example, if a RX UE configured a plurality of (sidelink) unicast connections (links), a method that beam RS or RS resource information (for example, resource information used for RS transmission/reception) for beam RS, beam measurement-related information (for example, a value of L1 RSRP/SINR/RSRQ measurement of a RS or a RS resource) / beam management-related information (for example, selected best beam-related RS index information or RS resource index information, a value of L1 RSRP/SINR/RSRQ measurement of a selected beam RS resource, a recommended TX beam/RX beam RS, or RS resource information, etc) can be used together for a plurality of (sidelink) unicast configuration-related TX UEs may be proposed in the present disclosure. For example, (SL) RS or ID used for (SL) RS resource information transmission (for example, dedicated broadcast/groupcast destination layer 2 ID or dedicated broadcast/groupcast destination layer 1 ID) or resource position information used for (SL) RS transmission (seed value or ID value used for RS sequence generation) that is commonly used between a plurality of (sidelink) unicast links may be pre-configured and may be shared via (sidelink) control information (SCI) or MAC CE or PC5 RRC message or PC5-S message exchange between (sidelink) unicast link establishment UEs. For example, information transmission related to (SL) RS or (SL) RS resource information or beam measurement-related information (for example, a value of L1 RSRP/SINR/RSRQ measurement of an RS or an RS resource) / beam management-related information (for example, selected best beam-related RS index information or RS resource index information, a value of L1 RSRP/SINR/RSRQ measurement of a selected beam RS resource, a recommended TX beam/RX beam RS, or RS resource information, etc) commonly used between a plurality of (sidelink) unicast links may be designated for groupcast or broadcast and a UE may perform transmission for this information in a groupcast or broadcast manner. For example, cast type, which is used for transmission, including the (SL) RS or the ID used for (SL) RS resource information transmission (for example, dedicated broadcast/groupcast destination layer 2 ID or dedicated broadcast/groupcast destination layer 1 ID) or the resource position information used for (SL) RS transmission (seed value or ID value used for RS sequence generation) that is commonly used between a plurality of (sidelink) unicast links may be designated for groupcast or broadcast and a UE may perform transmission for this information in a groupcast or broadcast manner.

According to an embodiment of the present disclosure, in (sidelink) unicast communication, reference signal (RS) information (for example, RS index, RS resource information, RS entity (e.g., CSI-RS or (SL) SSB or DMRS etc)), RS measurement entity (e.g., RSRP or RSRQ or SINR or RSSI), threshold for RS measurement, etc used for (sidelink) radio link monitoring (RLM) between UEs may be exchanged between UEs (e.g., via PC5 RRC message). A UE may declare (sidelink) RLF if all of the quality measurement values of measured RSs is lower than or equal to a pre-configured threshold (for example, the corresponding threshold may be configured per QoS profile or PC5 5QI or destination layer 2 ID or (sidelink) priority or PDB).

According to an embodiment of the present disclosure, in (sidelink) unicast communication, a UE may perform quality measurement for reference signals (for example, CSI-RS and/or (SL) SSB and/or DMRS etc) used for (sidelink) radio link monitoring (RLM) between UEs. A UE may use, by deriving average of quality measurement values measured for RSs (for example, RS #1, RS #2, RS#3), corresponding average quality measurement value as output of RLM. For example, UE may use, only if measuring average of quality measurement values measured for RSs (for example, RS #1, RS #2, RS#3) through same spatial RX filter, the corresponding average quality measurement value as output of RLM.

According to an embodiment of the present disclosure, in (sidelink) unicast communication, a beam management operation of a UE may be proposed as follows. For example, UE A and UE A-1 may be assumed to be physically identical UEs even though their source layer 2 IDs are different. It may be assumed that UE A has established unicast link #1 with UE B and UE A-1 has established unicast link #2 with UE C. For example, UE A/UE A-1 may exchange beam information or beam-related RS resource information to be commonly used with UE B and UE C. Even though unicast link #1 and unicast link #2 are different links, because UE A/UE A-1 exchanged beam information or beam-related RS resource information that can be used identically for both links, UE-C may perform beam/RS measurement or measurement for beam-related RS resources at sync timing of unicast link #1 (which is not its own unicasat link).

According to an embodiment of the present disclosure, a UE may indicate (or transmit) beam RS (or beam RS resource) information (for example, beam RS index or beam RS resource index or beam RS resources and index linked with beam RS information or an identifier that can identify beam RS or an identifier of beam RS resources linked with beam RS) to a peer UE via one (or a plurality of) (sidelink) control information (SCI) (or MAC CE or PC5 RRC message) per source and destination for a plurality of source (or source layer-1 ID or source layer-2 ID) and destination (or destination layer-1 ID or destination layer-2 ID) pairs. For example, this operation may be interpreted as UE transmitting beam RS (or beam RS resource) information (for example, beam RS index or beam RS resource index or beam RS resources and index linked with beam RS information or an identifier that can identify beam RS or an identifier of beam RS resources linked with beam RS) for another PC5 unicast link (or PC5 RRC connection) to a peer UE (or a UE matching destination or destination layer-1 ID or destination layer-2 ID) through currently operating PC5 unicast link (or PC5 RRC connection). For example, beam RS (and/or beam RS index and/or beam RS resource index) included in beam RS (or beam RS resource) information (for example, beam RS index or beam RS resource index or beam RS resources and index linked with beam RS information or an identifier that can identify beam RS or an identifier of beam RS resources linked with beam RS) transmitted via (sidelink) control information (SCI) (or MAC CE or PC5 RRC message) may reference each other. For example, to facilitate this (so that the beam RS can reference each other), the resource information of referenced beam RS (and/or beam RS index and/or beam RS resource index) may have to be transmitted together via (sidelink) control information (SCI) (or MAC CE or PC5 RRC message).

By establishing dedicated unicast links and leveraging a common ID for communication, this method can significantly increase network efficiency. It ensures direct and specific pathways for data transmission, reducing the likelihood of data collisions and bandwidth waste that are common in broadcast or multicast systems. This direct approach can lead to more efficient use of network resources and potentially higher data transmission speeds. By using a common ID for communication, devices from different manufacturers or with different operating systems can more easily communicate over the established unicast links. This flexibility is crucial in environments with a diverse array of devices and technologies. In scenarios where network resources are limited, the ability to establish unicast links based on a common ID allows for more precise control and allocation of these resources. The use of unicast links for communication between specific devices, combined with a common ID system, enhances the security and privacy of the transmitted data. Each communication link can be individually secured, and the common ID can facilitate the implementation of encryption and authentication protocols.

An operation disclosed herein may be applied to (sidelink) unicast/groupcast/broadcast operations.

According to an embodiment of the present disclosure, "channel" may be applied by replacing "carrier" or "resource block set of a specific carrier" or "band".

According to an embodiment of the present disclosure, a beam management operation may be interpreted by replacing beam selection or spatial filter selection or beam pairing or spatial filter pairing or beam failure recovery or spatial filter recovery or beam sweeping or spatial filter sweeping or beam switching or spatial filter sweeping or measurement of a reference signal resource or a measurement report operation of a reference signal resource or beam report or spatial filter report, etc.

According to an embodiment of the present disclosure, a beam may be interpreted by replacing a RS or a RS resource or a spatial filter resource.

According to an embodiment of the present disclosure, a RS may be interpreted by replacing a RS resource or a spatial filter resource.

According to an embodiment of the present disclosure, a TX UE may be interpreted by replacing a UE transmitting a beam or a UE transmitting a beam RS or a UE transmitting a beam RS resource, etc.

According to an embodiment of the present disclosure, an RX UE may be interpreted by replacing a UE receiving a beam or a UE receiving a beam RS or a UE receiving a beam RS resource, etc.

According to an embodiment of the present disclosure, a TX beam information and/or an RX beam information that a UE transmits and/or receives may be interpreted by replacing resource information of a reference signal (RS) related to a TX beam and/or resource information of a reference signal (RS) related to a RX beam, etc.

According to an embodiment of the present disclosure, a DCR and/or DCA message may be interpreted by replacing a PC5-S(sidelink) DCR message and/or a PC5-S(sidelink) DCA message, etc.

According to an embodiment of the present disclosure, even though the present disclosure discloses a RS for beam management as a (SL) CSI-RS, but may not be limited to it. The proposed operation of the present disclosure may be equally expanded and applied if using a RS for beam management as another reference signal (e.g., (sidelink) SSB) other than a (SL) CSI-RS.

According to an embodiment of the present disclosure, even though the present disclosure discloses a RS measurement for beam management as a RSRP, a but may not be limited to it. The proposed operation of the present disclosure may be equally expanded and applied if a RS measurement for beam management is another measurement operation (e.g., received signal strength indicator (RSSI) measurement, etc.).

According to an embodiment of the present disclosure, spatial setting and/or TCI information and/or QCL information and/or beam, etc. may refer to each other, and/or may be interpreted by replacing beam-related information, beam direction, a spatial domain transmission filter or a reception filter, etc. For example, a spatial domain transmission filter may be a spatial domain TX filter. For example, a spatial domain reception filter may be a spatial domain RX filter.

According to an embodiment of the present disclosure, a beam may be interpreted as being replaced with a spatial filter.

According to an embodiment of the present disclosure, a transmission (TX) beam may be interpreted as being replaced with a spatial transmission (TX) filter or spatial domain transmission (TX) filter.

According to an embodiment of the present disclosure, a beam may be interpreted as being replaced with a transmission (TX) beam or a reception (RX) beam or spatial transmission (TX) filter or spatial domain transmission (TX) filter or spatial reception (RX) filter or spatial domain reception (RX) filter.

According to an embodiment of the present disclosure, a reception (RX) beam may be interpreted as being replaced with a spatial reception (RX) filter or spatial domain reception (RX) filter.

According to an embodiment of the present disclosure, that spatial setting information (or beam information) for transmission is equal may mean that a spatial domain TX filter of a UE is equal for two different transmission signals. According to an embodiment of the present disclosure, that spatial setting information (or beam information) for reception is equal may be that two different transmission signals may have relationship of a QCL 'TypeD' and/or may have relationship to use a same spatial RX parameter.

For example, whether or not the (some) proposed method/rule of the present disclosure is applied and/or related parameter(s) (e.g., threshold value(s)) may be configured specifically (differently and/or independently) for each SL-Channel Access Priority Class (CAPC). For example, whether or not the (some) proposed method/rule of the present disclosure is applied and/or related parameter(s) (e.g., threshold value(s)) may be configured specifically (differently and/or independently) for each SL-LBT type (e.g., Type 1 LBT, Type 2A LBT, Type 2B LBT, Type 2C LBT). For example, whether or not the (some) proposed method/rule of the present disclosure is applied and/or related parameter(s) (e.g., threshold value(s)) may be configured specifically (and/or differently and/or independently) depending on whether or not Frame Based LBT (FBE) is applied. For example, whether or not the (some) proposed method/rule of the present disclosure is applied and/or related parameter(s) (e.g., threshold value(s)) may be configured specifically (and/or differently and/or independently) depending on whether or not Load Based LBT (LBE) is applied.

For example, whether or not the (some) proposed method/rule of the present disclosure is applied and/or related parameter(s) (e.g., threshold value(s)) may be configured specifically (differently and/or independently) for whether to LBT success/failure, per energy detection level related to LBT, per sidelink channel (PSCCH/PSSCH, PSFCH, SL-SSB(or S-SSB)), whether to apply Multi-Consecutive Slot Transmission (MCSt), whether to apply multi-PSFCH occasion, order/location of a resource configuring MCSt, whether to configure multiple starting point within one slot, whether to apply first start point (or second start point).

For example, whether or not the (some) proposed method/rule of the present disclosure is applied and/or related parameter(s) (e.g., threshold value(s)) may be configured specifically (differently and/or independently) for whether to LBT success/failure, per energy detection level related to LBT, per sidelink channel (PSCCH/PSSCH, PSFCH, SL-SSB(or S-SSB)), whether to apply Multi-Consecutive Slot Transmission (MCSt), whether to apply multi-PSFCH occasion, order/location of a resource configuring MCSt, whether to configure multiple starting point within one slot, whether to apply first start point (or second start point).

For example, whether or not the (some) proposed method/rule of the present disclosure is applied and/or related parameter(s) (e.g., threshold value(s)) may be configured specifically (and/or differently and/or independently) for each resource pool. For example, whether or not the (some) proposed method/rule of the present disclosure is applied and/or related parameter(s) (e.g., threshold value(s)) may be configured specifically (and/or differently and/or independently) for each congestion level. For example, whether or not the (some) proposed method/rule of the present disclosure is applied and/or related parameter(s) (e.g., threshold value(s)) may be configured specifically (and/or differently and/or independently) for each service priority. For example, whether or not the (some) proposed method/rule of the present disclosure is applied and/or related parameter(s) (e.g., threshold value(s)) may be configured specifically (and/or differently and/or independently) for each service type. For example, whether or not the (some) proposed method/rule of the present disclosure is applied and/or related parameter(s) (e.g., threshold value(s)) may be configured specifically (and/or differently and/or independently) for each QoS requirement (e.g., latency, reliability). For example, whether or not the (some) proposed method/rule of the present disclosure is applied and/or related parameter(s) (e.g., threshold value(s)) may be configured specifically (and/or differently and/or independently) for each PQI (5G QoS identifier (5QI) for PC5). For example, whether or not the (some) proposed method/rule of the present disclosure is applied and/or related parameter(s) (e.g., threshold value(s)) may be configured specifically (and/or differently and/or independently) for each traffic type (e.g., periodic generation or aperiodic generation). For example, whether or not the (some) proposed method/rule of the present disclosure is applied and/or related parameter(s) (e.g., threshold value(s)) may be configured specifically (and/or differently and/or independently) for each SL transmission resource allocation mode (e.g., mode 1 or mode 2). For example, whether or not the (some) proposed method/rule of the present disclosure is applied and/or related parameter(s) (e.g., threshold value(s)) may be configured specifically (and/or differently and/or independently) for each Tx profile (e.g., a Tx profile indicating that a service supports sidelink DRX operation or a Tx profile indicating that a service does not need to support sidelink DRX operation).

For example, whether or not the proposed rule of the present disclosure is applied and/or related parameter configuration value(s) may be configured specifically (and/or differently and/or independently) depending on whether a PUCCH configuration is supported. For example, whether or not the proposed rule of the present disclosure is applied and/or related parameter configuration value(s) may be configured specifically (and/or differently and/or independently) for a PUCCH resource being configured. For example, whether or not the proposed rule of the present disclosure is applied and/or related parameter configuration value(s) may be configured specifically (and/or differently and/or independently) for a PUCCH resource not being configured. For example, whether or not the proposed rule of the present disclosure is applied and/or related parameter configuration value(s) may be configured specifically (and/or differently and/or independently) for each resource pool. For example, whether or not the proposed rule of the present disclosure is applied and/or related parameter configuration value(s) may be configured specifically (and/or differently and/or independently) for a resource pool with a PSFCH. For example, whether or not the proposed rule of the present disclosure is applied and/or related parameter configuration value(s) may be configured specifically (and/or differently and/or independently) for a resource pool without a PSFCH. For example, whether or not the proposed rule of the present disclosure is applied and/or related parameter configuration value(s) may be configured specifically (and/or differently and/or independently) for each sidelink logical channel. For example, whether or not the proposed rule of the present disclosure is applied and/or related parameter configuration value(s) may be configured specifically (and/or differently and/or independently) for logical channel group. For example, whether or not the proposed rule of the present disclosure is applied and/or related parameter configuration value(s) may be configured specifically (and/or differently and/or independently) for Uu logical channel. For example, whether or not the proposed rule of the present disclosure is applied and/or related parameter configuration value(s) may be configured specifically (and/or differently and/or independently) for Uu logical channel group. For example, whether or not the proposed rule of the present disclosure is applied and/or related parameter configuration value(s) may be configured specifically (and/or differently and/or independently) for each service/packet type. For example, whether or not the proposed rule of the present disclosure is applied and/or related parameter configuration value(s) may be configured specifically (and/or differently and/or independently) for each service/packet priority. For example, whether or not the proposed rule of the present disclosure is applied and/or related parameter configuration value(s) may be configured specifically (and/or differently and/or independently) for each QoS requirement. For example, whether or not the proposed rule of the present disclosure is applied and/or related parameter configuration value(s) may be configured specifically (and/or differently and/or independently) for each URLLC/EMBB traffic. For example, whether or not the proposed rule of the present disclosure is applied and/or related parameter configuration value(s) may be configured specifically (and/or differently and/or independently) for each reliability. For example, whether or not the proposed rule of the present disclosure is applied and/or related parameter configuration value(s) may be configured specifically (and/or differently and/or independently) for each latency. For example, whether or not the proposed rule of the present disclosure is applied and/or related parameter configuration value(s) may be configured specifically (and/or differently and/or independently) for each PQI. For example, whether or not the proposed rule of the present disclosure is applied and/or related parameter configuration value(s) may be configured specifically (and/or differently and/or independently) for each PFI. For example, whether or not the proposed rule of the present disclosure is applied and/or related parameter configuration value(s) may be configured specifically (and/or differently and/or independently) for each cast type. For example, whether or not the proposed rule of the present disclosure is applied and/or related parameter configuration value(s) may be configured specifically (and/or differently and/or independently) for unicast. For example, whether or not the proposed rule of the present disclosure is applied and/or related parameter configuration value(s) may be configured specifically (and/or differently and/or independently) for groupcast. For example, whether or not the proposed rule of the present disclosure is applied and/or related parameter configuration value(s) may be configured specifically (and/or differently and/or independently) for broadcast. For example, whether or not the proposed rule of the present disclosure is applied and/or related parameter configuration value(s) may be configured specifically (and/or differently and/or independently) for each (resource pool) congestion level. For example, whether or not the proposed rule of the present disclosure is applied and/or related parameter configuration value(s) may be configured specifically (and/or differently and/or independently) for each (resource pool) CBR. For example, whether or not the proposed rule of the present disclosure is applied and/or related parameter configuration value(s) may be configured specifically (and/or differently and/or independently) for each SL HARQ feedback option. For example, whether or not the proposed rule of the present disclosure is applied and/or related parameter configuration value(s) may be configured specifically (and/or differently and/or independently) for NACK-only feedback. For example, whether or not the proposed rule of the present disclosure is applied and/or related parameter configuration value(s) may be configured specifically (and/or differently and/or independently) for ACK/NACK feedback. For example, whether or not the proposed rule of the present disclosure is applied and/or related parameter configuration value(s) may be configured specifically (or differently or independently) for HARQ Feedback Enabled MAC PDU transmission. For example, whether or not the proposed rule of the present disclosure is applied and/or related parameter configuration value(s) may be configured specifically (or differently or independently) for HARQ Feedback Disabled MAC PDU transmission. For example, whether or not the proposed rule of the present disclosure is applied and/or related parameter configuration value(s) may be configured specifically (or differently or independently) according to whether a PUCCH-based SL HARQ feedback reporting operation is configured or not. For example, whether or not the proposed rule of the present disclosure is applied and/or related parameter configuration value(s) may be configured specifically (or differently or independently) for pre-emption or depending on whether or not pre-emption-based resource reselection is performed. For example, whether or not the proposed rule of the present disclosure is applied and/or related parameter configuration value(s) may be configured specifically (or differently or independently) for re-evaluation or depending on whether or not re-evaluation-based resource reselection is performed. For example, whether or not the proposed rule of the present disclosure is applied and/or related parameter configuration value(s) may be configured specifically (and/or differently and/or independently) for each L1 source identifier. For example, whether or not the proposed rule of the present disclosure is applied and/or related parameter configuration value(s) may be configured specifically (and/or differently and/or independently) for each L1 destination identifier. For example, whether or not the proposed rule of the present disclosure is applied and/or related parameter configuration value(s) may be configured specifically (and/or differently and/or independently) for each L2 source identifier. For example, whether or not the proposed rule of the present disclosure is applied and/or related parameter configuration value(s) may be configured specifically (and/or differently and/or independently) for each L2 destination identifier. For example, whether or not the proposed rule of the present disclosure is applied and/or related parameter configuration value(s) may be configured specifically (and/or differently and/or independently) for L2 (a combination of source ID and destination ID) identifier. For example, whether or not the proposed rule of the present disclosure is applied and/or related parameter configuration value(s) may be configured specifically (and/or differently and/or independently) for L1 (a combination of source ID and destination ID) identifier. For example, whether or not the proposed rule of the present disclosure is applied and/or related parameter configuration value(s) may be configured specifically (and/or differently and/or independently) for each (L2 or L1) (a combination of a pair of source ID and destination ID and a cast type) identifier. For example, whether or not the proposed rule of the present disclosure is applied and/or related parameter configuration value(s) may be configured specifically (and/or differently and/or independently) for each direction of a pair of source layer ID and destination layer ID. For example, whether or not the proposed rule of the present disclosure is applied and/or related parameter configuration value(s) may be configured specifically (and/or differently and/or independently) for each PC5 RRC connection. For example, whether or not the proposed rule of the present disclosure is applied and/or related parameter configuration value(s) may be configured specifically (and/or differently and/or independently) for each PC5 RRC link. For example, whether or not the proposed rule of the present disclosure is applied and/or related parameter configuration value(s) may be configured specifically (or differently or independently) depending on whether or not SL DRX is performed. For example, whether or not the proposed rule of the present disclosure is applied and/or related parameter configuration value(s) may be configured specifically (or differently or independently) for SL DRX being performed. For example, whether or not the proposed rule of the present disclosure is applied and/or related parameter configuration value(s) may be configured specifically (or differently or independently) for SL DRX not being performed. For example, whether or not the proposed rule of the present disclosure is applied and/or related parameter configuration value(s) may be configured specifically (or differently or independently) depending on whether or not SL DRX is supported. For example, whether or not the proposed rule of the present disclosure is applied and/or related parameter configuration value(s) may be configured specifically (or differently or independently) for SL DRX being supported. For example, whether or not the proposed rule of the present disclosure is applied and/or related parameter configuration value(s) may be configured specifically (or differently or independently) for SL DRX not being supported. For example, whether or not the proposed rule of the present disclosure is applied and/or related parameter configuration value(s) may be configured specifically (and/or differently and/or independently) for each SL mode type. For example, whether or not the proposed rule of the present disclosure is applied and/or related parameter configuration value(s) may be configured specifically (and/or differently and/or independently) for resource allocation mode 1. For example, whether or not the proposed rule of the present disclosure is applied and/or related parameter configuration value(s) may be configured specifically (and/or differently and/or independently) for resource allocation mode 2. For example, whether or not the proposed rule of the present disclosure is applied and/or related parameter configuration value(s) may be configured specifically (or differently or independently) for the case of performing periodic resource reservation. For example, whether or not the proposed rule of the present disclosure is applied and/or related parameter configuration value(s) may be configured specifically (or differently or independently) for the case of performing aperiodic resource reservation. For example, whether or not the proposed rule of the present disclosure is applied and/or related parameter configuration value(s) may be configured specifically (or differently or independently) for each Tx profile. For example, whether or not the proposed rule of the present disclosure is applied and/or related parameter configuration value(s) may be configured specifically (or differently or independently) for a Tx profile indicating that a service supports sidelink DRX operation. For example, whether or not the proposed rule of the present disclosure is applied and/or related parameter configuration value(s) may be configured specifically (or differently or independently) for a Tx profile indicating that a service does not need to support sidelink DRX operation.

The proposal and whether or not the proposal rule of the present disclosure is applied (and/or related parameter configuration value(s)) may also be applied to a mmWave SL operation.

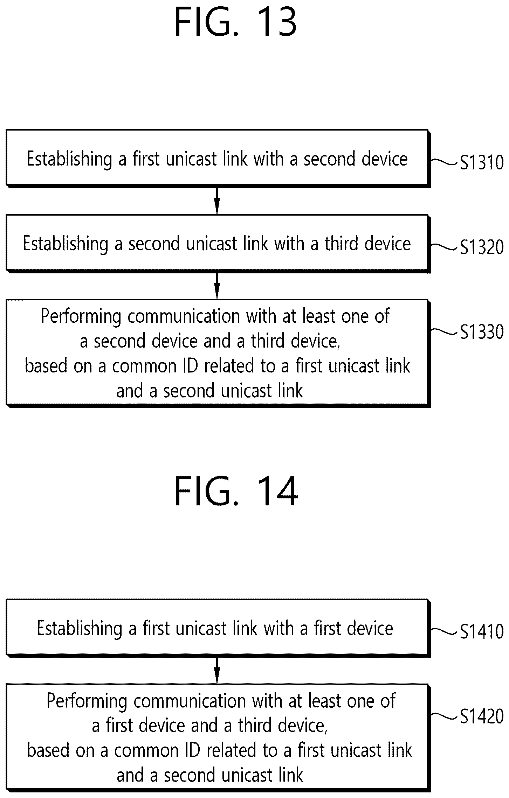

FIG. 13 shows a method for a first device to perform wireless communication, based on an embodiment of the present disclosure. The embodiment of FIG. 13 may be combined with various embodiments of the present disclosure.

Referring to FIG. 13, in step S1310, the first device may establish a first unicast link with a second device. In step S1320, the first device may establish a second unicast link with a third device. In step S1330, the first device may perform communication with at least one of the second device and the third device, based on a common identity (ID) related to the first unicast link and the second unicast link. For example, the common ID related to the first unicast link and the second unicast link is configured for the first device.

For example, information for a reference signal commonly used for the first unicast link and the second unicast link may be transmitted through the common ID related to the first unicast link and the second unicast link.

For example, a resource information of the reference signal commonly used for the first unicast link and the second unicast link may be transmitted through the common ID related to the first unicast link and the second unicast link.

For example, the common ID related to the first unicast link and the second unicast link may be a layer-2 common ID between at least one of a groupcast or a broadcast.

For example, the common ID related to the first unicast link and the second unicast link may be a layer-1 common ID between at least one of a groupcast or a broadcast.

For example, the common ID related to the first unicast link and the second unicast link may be transmitted via at least one of sidelink control information (SCI), a medium access control (MAC) control element (CE), a PC5-radio resource control (RRC) message, or PC5-signaling (signaling) message.

For example, the common ID related to the first unicast link and the second unicast link may be pre-configured for at least one of the first device, the second device, or the third device.

For example, the common ID related to the first unicast link and the second unicast link may be configured for at least one of the first device, the second device, or the third device by a base station.

For example, the common ID related to the first unicast link and the second unicast link may be transmitted through at least one of a groupcast or a broadcast.

For example, the information for the reference signal commonly used for the first unicast link and the second unicast link may include resource configuration information for a reference signal for a beam.

For example, the information for the reference signal commonly used for the first unicast link and the second unicast link may be at least one of information for an index of a reference signal related to a selected best beam or information for an index of a resource of the reference signal related to the selected best beam.

For example, at least one of the first unicast link or the second unicast link may be established based on a direct communication request (DCR) message transmitted from the first device.

For example, the at least one of the first unicast link or the second unicast link may be established based on a direct communication accept (DCA) message received from at least one of the second device or the third device.

The proposed method can be applied to devices based on various embodiments of the present disclosure. First, the processor 102 of the first device 100 may establish a first unicast link with a second device. Furthermore, the processor 102 of the first device 100 may establish a second unicast link with a third device. Furthermore, the processor 102 of the first device 100 may perform communication with at least one of the second device and the third device, based on a common identity (ID) related to the first unicast link and the second unicast link. For example, the common ID related to the first unicast link and the second unicast link is configured for the first device.

Based on an embodiment of the present disclosure, a first device adapted to perform wireless communication may be provided. For example, the first device may comprise: at least one transceiver; at least one processor; and at least one memory connected to the at least one processor and storing instructions. For example, the instructions, based on being executed by the at least one processor, may cause the first device to perform operations comprising: establishing a first unicast link with a second device; establishing a second unicast link with a third device; and performing communication with at least one of the second device and the third device, based on a common identity (ID) related to the first unicast link and the second unicast link, wherein the common ID related to the first unicast link and the second unicast link is configured for the first device.

Based on an embodiment of the present disclosure, a processing device adapted to control a first device may be provided. For example, the processing device may comprise: at least one processor; and at least one memory connected to the at least one processor and storing instructions. For example, the instructions, based on being executed by the at least one processor, may cause the first device to perform operations comprising: establishing a first unicast link with a second device; establishing a second unicast link with a third device; and performing communication with at least one of the second device and the third device, based on a common identity (ID) related to the first unicast link and the second unicast link, wherein the common ID related to the first unicast link and the second unicast link is configured for the first device.

Based on an embodiment of the present disclosure, a non-transitory computer-readable storage medium storing instructions may be provided. For example, the instructions, when executed, may cause a first device to perform operations comprising: establishing a first unicast link with a second device; establishing a second unicast link with a third device; and performing communication with at least one of the second device and the third device, based on a common identity (ID) related to the first unicast link and the second unicast link, wherein the common ID related to the first unicast link and the second unicast link is configured for the first device.

FIG. 14 shows a method for a second device to perform wireless communication, based on an embodiment of the present disclosure. The embodiment of FIG. 14 may be combined with various embodiments of the present disclosure.

Referring to FIG. 14, in step S1410, the second device may establish a first unicast link with a first device. In step S1420, the second device may perform communication with at least one of the first device and a third device, based on a common identity (ID) related to the first unicast link and a second unicast link. For example, the common ID related to the first unicast link and the second unicast link is configured for the first device. For example, the second unicast link is established between the first device and the third device.

For example, information for a reference signal commonly used for the first unicast link and the second unicast link may be received through the common ID related to the first unicast link and the second unicast link.

For example, a resource information of the reference signal commonly used for the first unicast link and the second unicast link may be received through the common ID related to the first unicast link and the second unicast link.

For example, the common ID related to the first unicast link and the second unicast link may be a layer-2 common ID between at least one of a groupcast or a broadcast.

For example, the common ID related to the first unicast link and the second unicast link may be a layer-1 common ID between at least one of a groupcast or a broadcast.

For example, the common ID related to the first unicast link and the second unicast link may be received via at least one of sidelink control information (SCI), a medium access control (MAC) control element (CE), a PC5-radio resource control (RRC) message, or PC5-signaling (signaling) message.

For example, the common ID related to the first unicast link and the second unicast link may be pre-configured for at least one of the first device, the second device, or the third device.

For example, the common ID related to the first unicast link and the second unicast link may be configured for at least one of the first device, the second device, or the third device by a base station.

For example, the common ID related to the first unicast link and the second unicast link may be received through at least one of a groupcast or a broadcast.

For example, the information for the reference signal commonly used for the first unicast link and the second unicast link may include resource configuration information for a reference signal for a beam.

For example, the information for the reference signal commonly used for the first unicast link and the second unicast link may be at least one of information for an index of a reference signal related to a selected best beam or information for an index of a resource of the reference signal related to the selected best beam.

For example, at least one of the first unicast link or the second unicast link may be established based on a direct communication request (DCR) message received from the first device.

For example, the at least one of the first unicast link or the second unicast link may be established based on a direct communication accept (DCA) message transmitted from at least one of the second device or the third device.

The proposed method can be applied to devices based on various embodiments of the present disclosure. First, the processor 202 of the second device 200 may establish a first unicast link with a first device. Furthermore, the processor 202 of the second device 200 may perform communication with at least one of the first device and a third device, based on a common identity (ID) related to the first unicast link and a second unicast link. For example, the common ID related to the first unicast link and the second unicast link is configured for the first device. For example, the second unicast link is established between the first device and the third device.

Based on an embodiment of the present disclosure, a second device adapted to perform wireless communication may be provided. For example, the second device may comprise: at least one transceiver; at least one processor; and at least one memory connected to the at least one processor and storing instructions. For example, the instructions, based on being executed by the at least one processor, may cause the second device to perform operations comprising: establishing a first unicast link with a first device; and performing communication with at least one of the first device and a third device, based on a common identity (ID) related to the first unicast link and a second unicast link, wherein the common ID related to the first unicast link and the second unicast link is configured for the first device, and wherein the second unicast link is established between the first device and the third device.

Based on an embodiment of the present disclosure, a processing device adapted to control a second device may be provided. For example, the processing device may comprise: at least one processor; and at least one memory connected to the at least one processor and storing instructions. For example, the instructions, based on being executed by the at least one processor, may cause the second device to perform operations comprising: establishing a first unicast link with a first device; and performing communication with at least one of the first device and a third device, based on a common identity (ID) related to the first unicast link and a second unicast link, wherein the common ID related to the first unicast link and the second unicast link is configured for the first device, and wherein the second unicast link is established between the first device and the third device.

Based on an embodiment of the present disclosure, a non-transitory computer-readable storage medium storing instructions may be provided. For example, the instructions, when executed, may cause a second device to perform operations comprising: establishing a first unicast link with a first device; and performing communication with at least one of the first device and a third device, based on a common identity (ID) related to the first unicast link and a second unicast link, wherein the common ID related to the first unicast link and the second unicast link is configured for the first device, and wherein the second unicast link is established between the first device and the third device. Various embodiments of the present disclosure may be combined with each other.

Hereinafter, device(s) to which various embodiments of the present disclosure can be applied will be described.

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

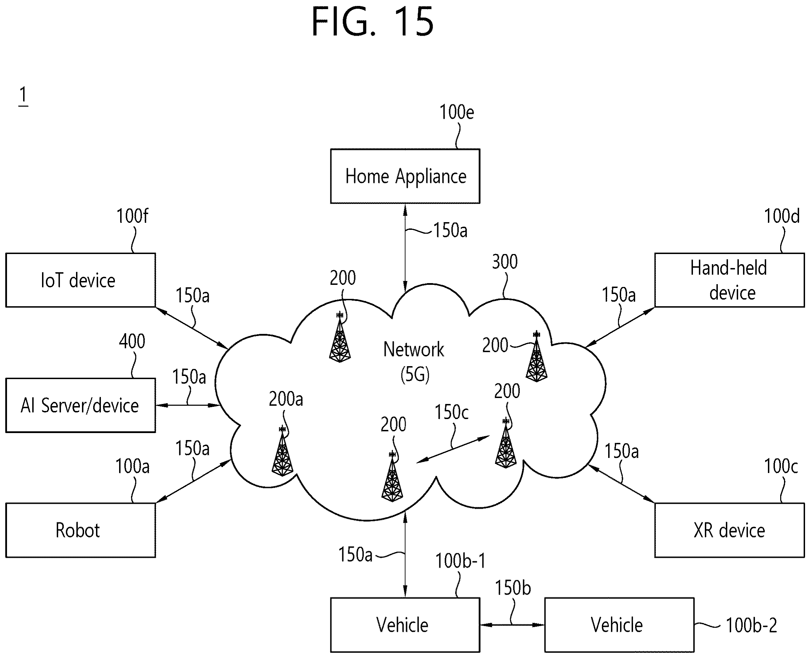

FIG. 15 shows a communication system 1, based on an embodiment of the present disclosure. The embodiment of FIG. 15 may be combined with various embodiments of the present disclosure.

Referring to FIG. 15, a communication system 1 to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an extended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

Here, wireless communication technology implemented in wireless devices 100a to 100f of the present disclosure may include Narrowband Internet of Things for low-power communication in addition to LTE, NR, and 6G. In this case, for example, NB-IoT technology may be an example of Low Power Wide Area Network (LPWAN) technology and may be implemented as standards such as LTE Cat NB1, and/or LTE Cat NB2, and is not limited to the name described above. Additionally or alternatively, the wireless communication technology implemented in the wireless devices 100a to 100f of the present disclosure may perform communication based on LTE-M technology. In this case, as an example, the LTE-M technology may be an example of the LPWAN and may be called by various names including enhanced Machine Type Communication (eMTC), and the like. For example, the LTE-M technology may be implemented as at least any one of various standards such as 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, and is not limited to the name described above. Additionally or alternatively, the wireless communication technology implemented in the wireless devices 100a to 100f of the present disclosure may include at least one of Bluetooth, Low Power Wide Area Network (LPWAN), and ZigBee considering the low-power communication, and is not limited to the name described above. As an example, the ZigBee technology may generate personal area networks (PAN) related to small/low-power digital communication based on various standards including IEEE 802.15.4, and the like, and may be called by various names.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

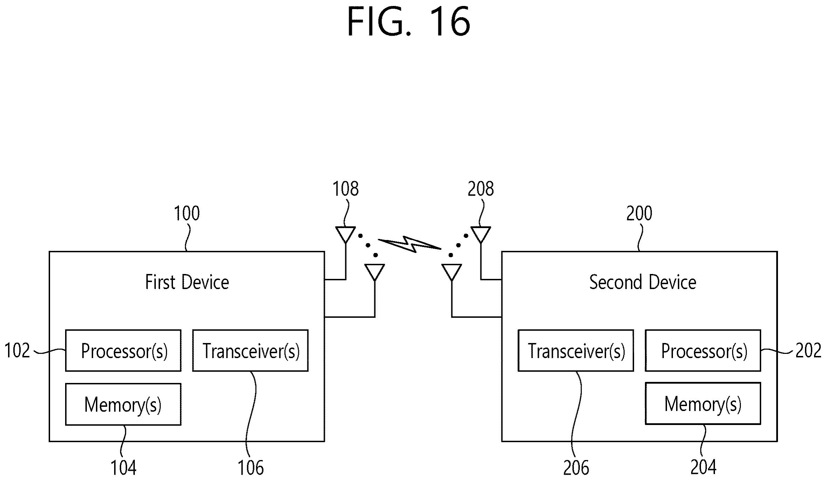

FIG. 16 shows wireless devices, based on an embodiment of the present disclosure. The embodiment of FIG. 16 may be combined with various embodiments of the present disclosure.

Referring to FIG. 16, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 15.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

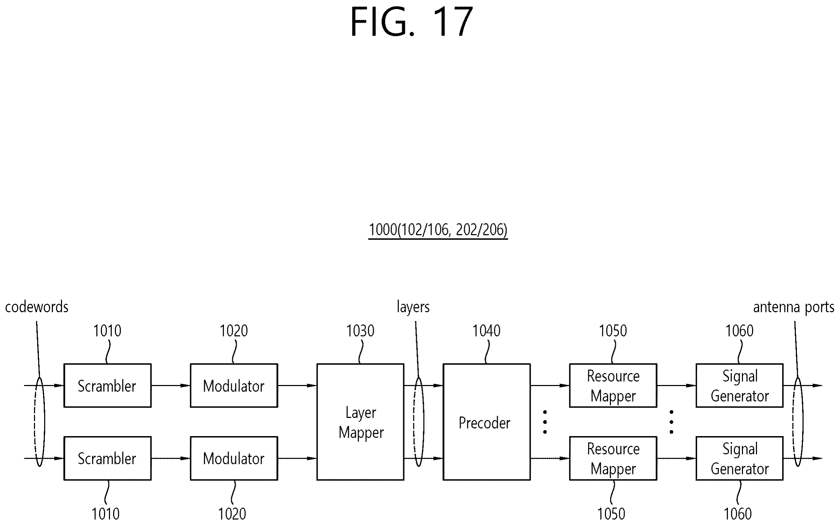

FIG. 17 shows a signal process circuit for a transmission signal, based on an embodiment of the present disclosure. The embodiment of FIG. 17 may be combined with various embodiments of the present disclosure.

Referring to FIG. 17, a signal processing circuit 1000 may include scramblers 1010, modulators 1020, a layer mapper 1030, a precoder 1040, resource mappers 1050, and signal generators 1060. An operation/function of FIG. 17 may be performed, without being limited to, the processors 102 and 202 and/or the transceivers 106 and 206 of FIG. 16. Hardware elements of FIG. 17 may be implemented by the processors 102 and 202 and/or the transceivers 106 and 206 of FIG. 16. For example, blocks 1010 to 1060 may be implemented by the processors 102 and 202 of FIG. 16. Alternatively, the blocks 1010 to 1050 may be implemented by the processors 102 and 202 of FIG. 16 and the block 1060 may be implemented by the transceivers 106 and 206 of FIG. 16.

Codewords may be converted into radio signals via the signal processing circuit 1000 of FIG. 17. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 17. For example, the wireless devices (e.g., 100 and 200 of FIG. 16) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

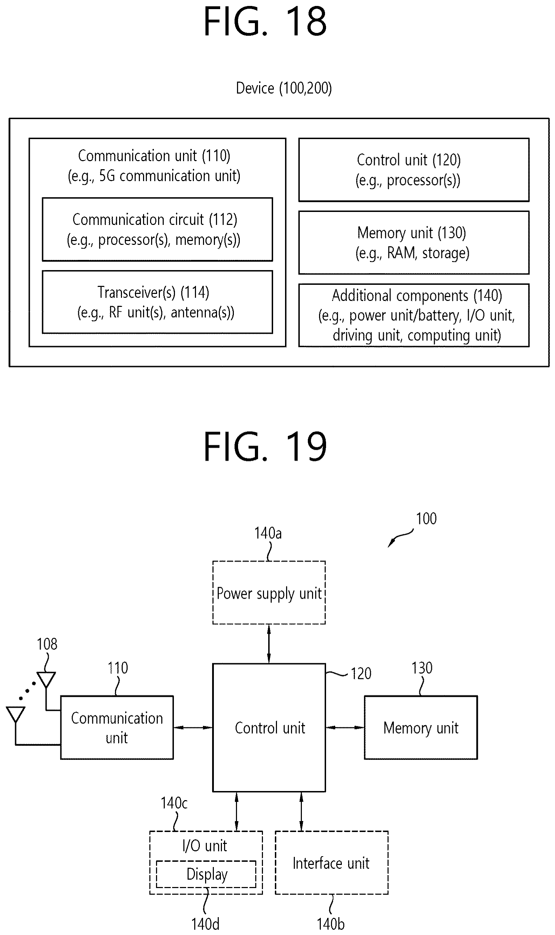

FIG. 18 shows another example of a wireless device, based on an embodiment of the present disclosure. The wireless device may be implemented in various forms according to a use-case/service (refer to FIG. 15). The embodiment of FIG. 18 may be combined with various embodiments of the present disclosure.

Referring to FIG. 18, wireless devices 100 and 200 may correspond to the wireless devices 100 and 200 of FIG. 16 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 16. For example, the transceiver(s) 114 may include the one or more transceivers 106 and 206 and/or the one or more antennas 108 and 208 of FIG. 16. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 15), the vehicles (100b-1 and 100b-2 of FIG. 15), the XR device (100c of FIG. 15), the hand-held device (100d of FIG. 15), the home appliance (100e of FIG. 15), the IoT device (100f of FIG. 15), a digital broadcast terminal, a hologram device, a public safety device, an MTC device, a medicine device, a fintech device (or a finance device), a security device, a climate/environment device, the AI server/device (400 of FIG. 15), the BSs (200 of FIG. 15), a network node, etc. The wireless device may be used in a mobile or fixed place according to a use-example/service.

In FIG. 18, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 18 will be described in detail with reference to the drawings.

FIG. 19 shows a hand-held device, based on an embodiment of the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless Terminal (WT). The embodiment of FIG. 19 may be combined with various embodiments of the present disclosure.

Referring to FIG. 19, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to140c correspond to the blocks 110 to 130/140 of FIG. 18, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

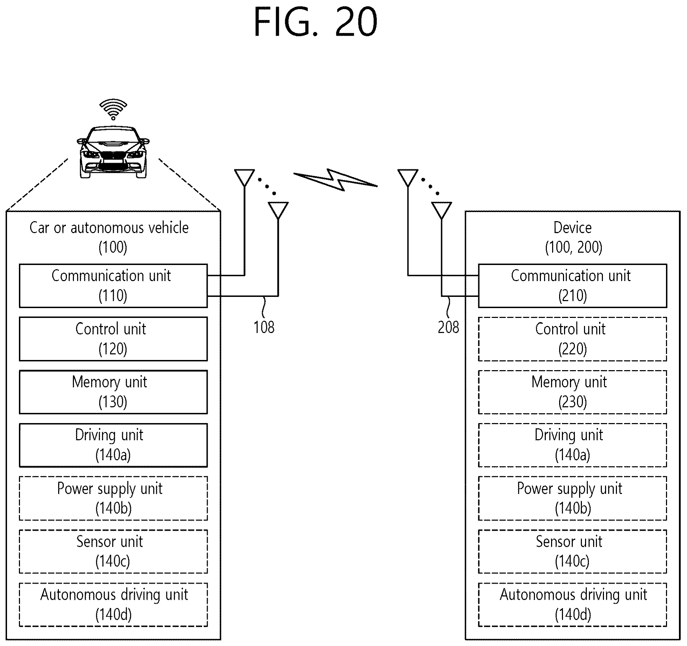

FIG. 20 shows a vehicle or an autonomous vehicle, based on an embodiment of the present disclosure. The vehicle or autonomous vehicle may be implemented by a mobile robot, a car, a train, a manned/unmanned Aerial Vehicle (AV), a ship, etc. The embodiment of FIG. 20 may be combined with various embodiments of the present disclosure.

Referring to FIG. 20, a vehicle or autonomous vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 18, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous vehicle 100. The control unit 120 may include an Electronic Control Unit (ECU). The driving unit 140a may cause the vehicle or the autonomous vehicle 100 to drive on a road. The driving unit 140a may include an engine, a motor, a powertrain, a wheel, a brake, a steering device, etc. The power supply unit 140b may supply power to the vehicle or the autonomous vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous vehicles and provide the predicted traffic information data to the vehicles or the autonomous vehicles.

Claims in the present description can be combined in a various way. For instance, technical features in method claims of the present description can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method.

## Claims

1. A method performed by a first device in a wireless communication system, the method comprising:
establishing a first unicast link with a second device;
establishing a second unicast link with a third device; and
performing communication with at least one of the second device and the third device, based on a common identity (ID) related to the first unicast link and the second unicast link,
wherein the common ID related to the first unicast link and the second unicast link is configured for the first device.

2. The method of claim 1,
wherein information for a reference signal commonly used for the first unicast link and the second unicast link is transmitted through the common ID related to the first unicast link and the second unicast link.

3. The method of claim 2,
wherein a resource information of the reference signal commonly used for the first unicast link and the second unicast link is transmitted through the common ID related to the first unicast link and the second unicast link.

4. The method of claim 1,
wherein the common ID related to the first unicast link and the second unicast link is a layer-2 common ID between at least one of a groupcast or a broadcast.

5. The method of claim 1,
wherein the common ID related to the first unicast link and the second unicast link is a layer-1 common ID between at least one of a groupcast or a broadcast.

6. The method of claim 1,
wherein the common ID related to the first unicast link and the second unicast link is transmitted via at least one of sidelink control information (SCI), a medium access control (MAC) control element (CE), a PC5-radio resource control (RRC) message, or PC5-signaling (signaling) message.

7. The method of claim 1,
wherein the common ID related to the first unicast link and the second unicast link is pre-configured for at least one of the first device, the second device, or the third device.

8. The method of claim 1,
wherein the common ID related to the first unicast link and the second unicast link is configured for at least one of the first device, the second device, or the third device by a base station.

9. The method of claim 1,
wherein the common ID related to the first unicast link and the second unicast link is transmitted through at least one of a groupcast or a broadcast.

10. The method of claim 2,
wherein the information for the reference signal commonly used for the first unicast link and the second unicast link includes resource configuration information for a reference signal for a beam.

11. The method of claim 2,
wherein the information for the reference signal commonly used for the first unicast link and the second unicast link is at least one of information for an index of a reference signal related to a selected best beam or information for an index of a resource of the reference signal related to the selected best beam.

12. The method of claim 1,
wherein at least one of the first unicast link or the second unicast link is established based on a direct communication request (DCR) message transmitted from the first device.

13. The method of claim 12,
wherein the at least one of the first unicast link or the second unicast link is established based on a direct communication accept (DCA) message received from at least one of the second device or the third device.

14. A first device adapted to perform wireless communication, the first device comprising:
at least one transceiver;
at least one processor; and
at least one memory connected to the at least one processor and storing instructions that, based on being executed by the at least one processor, cause the first device to perform operations comprising:
establishing a first unicast link with a second device;
establishing a second unicast link with a third device; and
performing communication with at least one of the second device and the third device, based on a common identity (ID) related to the first unicast link and the second unicast link,
wherein the common ID related to the first unicast link and the second unicast link is configured for the first device.

15. A processing device adapted to control a first device, the processing device comprising:
at least one processor; and
at least one memory connected to the at least one processor and storing instructions that, based on being executed by the at least one processor, cause the first device to perform operations comprising:
establishing a first unicast link with a second device;
establishing a second unicast link with a third device; and
performing communication with at least one of the second device and the third device, based on a common identity (ID) related to the first unicast link and the second unicast link,
wherein the common ID related to the first unicast link and the second unicast link is configured for the first device.

16. A non-transitory computer-readable storage medium storing instructions that, when executed, cause a first device to perform operations comprising:
establishing a first unicast link with a second device;
establishing a second unicast link with a third device; and
performing communication with at least one of the second device and the third device, based on a common identity (ID) related to the first unicast link and the second unicast link,
wherein the common ID related to the first unicast link and the second unicast link is configured for the first device.

17. A method performed by a second device in wireless communication system, the method comprising:
establishing a first unicast link with a first device; and
performing communication with at least one of the first device and a third device, based on a common identity (ID) related to the first unicast link and a second unicast link,
wherein the common ID related to the first unicast link and the second unicast link is configured for the first device, and
wherein the second unicast link is established between the first device and the third device.

18. A second device adapted to perform wireless communication, the second device comprising:
at least one transceiver;
at least one processor; and
at least one memory connected to the at least one processor and storing instructions that, based on being executed by the at least one processor, cause the second device to perform operations comprising:
establishing a first unicast link with a first device; and
performing communication with at least one of the first device and a third device, based on a common identity (ID) related to the first unicast link and a second unicast link,
wherein the common ID related to the first unicast link and the second unicast link is configured for the first device, and
wherein the second unicast link is established between the first device and the third device.

19. A processing device adapted to control a second device, the processing device comprising:
at least one processor; and
at least one memory connected to the at least one processor and storing instructions that, based on being executed by the at least one processor, cause the second device to perform operations comprising:
establishing a first unicast link with a first device; and
performing communication with at least one of the first device and a third device, based on a common identity (ID) related to the first unicast link and a second unicast link,
wherein the common ID related to the first unicast link and the second unicast link is configured for the first device, and
wherein the second unicast link is established between the first device and the third device.

20. A non-transitory computer-readable storage medium storing instructions that, when executed, cause a second device to perform operations comprising:
establishing a first unicast link with a first device; and
performing communication with at least one of the first device and a third device, based on a common identity (ID) related to the first unicast link and a second unicast link,
wherein the common ID related to the first unicast link and the second unicast link is configured for the first device, and
wherein the second unicast link is established between the first device and the third device.
